# EUROPÄISCHE PATENTSCHRIFT

(11) **EP 0 918 074 B1**
(45) Veröffentlichungstag und Bekanntmachung des Hinweises auf die Patenterteilung: **12.07.2000**
(21) Anmeldenummer: 97810889.2
(22) Anmeldetag: 20.11.1997
(51) Int. Cl.: C09B 43/16, C09D 11/00

(54) **Azofarbstoffe, ihre Herstellung und Verwendung**
Azo dyes, their preparation and use thereof
Colorants azoiques, leur préparation et utilisation

(43) Veröffentlichungstag der Anmeldung: 26.05.1999
(73) Patentinhaber: ILFORD Imaging Switzerland GmbH, 1723 Marly 1 (CH)
(72) Erfinder: Baettig, Kurt, 1724 Praroman (CH); Jan, Gérald, 1752 Villars-sur-Glâne (CH)

(56) Entgegenhaltungen:
- EP-A- 0 187 520
- EP-A- 0 194 885
- EP-A- 0 755 984
- WO-A-96/24635
- WO-A-96/24636
- WO-A-98/12263
- WO-A-98/12264

## Beschreibung

### Technisches Gebiet

Die Erfindung bezieht sich auf neue Azofarbstoffe und ihre Salze, ein Verfahren zu ihrer Herstellung, ihren Einsatz in Färbe- und Druckverfahren sowie auf Färbepräparationen, die diese Farbstoffe enthalten, insbesondere wässrige Tinten für den Tintenstrahldruck.

### Stand der Technik

Beim Tintenstrahldruck sind im wesentlichen zwei Verfahren zu unterscheiden:
Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden je nachdem, ob eine Bildstelle bedruckt werden soll oder nicht, in einen Auffangbehälter abgelenkt oder auf das Aufnahmematerial aufgebracht. Dies geschieht z. B. dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, indem ungeladene Tröpfchen in den Auffangbehälter abgelenkt werden.
Beim nichtkontinuierlichen Verfahren, dem sogenannten "Drop on demand", werden die Tintentropfen nur dann erzeugt, wenn auf Grund der digitalen Daten ein Bildpunkt dargestellt werden muss.

Die wichtigsten Bestandteile einer Tinte für den Tintenstrahldruck sind die Farbstoffe. Obwohl schon eine ganze Anzahl verschiedener Farbstoffe vorgeschlagen worden sind, vermag keiner alle an ihn gestellten Anforderungen zu erfüllen.

Reaktivfarbstoffe mit dem 1,3,5-Triazin-Strukturelement sind im Textildruck gebräuchlich. Sie wurden ebenfalls schon als Farbstoffe für Tinten für den Tintenstrahldruck erwähnt. Diese Farbstoffe sind aus verschiedenen Gründen für diese Anwendung schlecht geeignet. Die reaktiven Gruppen sind über längere Zeit in wässriger Lösung nicht stabil. Farbstoffe mit reaktiven Gruppen sind weiter wegen ihres möglichen Gesundheitsrisikos schlecht für den Einsatz in einer nichtchemischen Umgebung geeignet.
Farbstoffe verschiedener Struktur zur Anwendung in Tinten für den Tintenstrahldruck, die keine reaktiven Gruppen enthalten, werden z. B. in den Patenten US 4'771'129, US 4'780'532, US 4'968'784, US 4'975'118, US 4'997'919 und US 5'118'737 sowie den Patentanmeldungen JP 5-171'053, EP 0'187'520, EP 0'194'885 und EP 0'755'984 beschrieben.

Der Azofarbstoff der Formel (1) 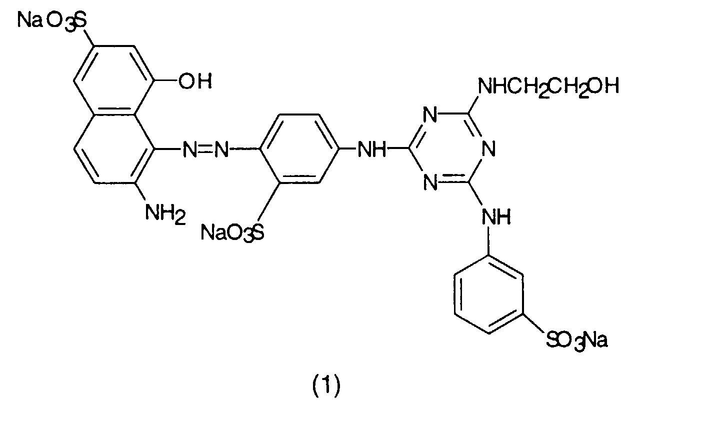 wurde in der Patentanmeldung EP 0'187'520 (Beispiel 4) beschrieben. Dieser und ähnliche der dort beschriebenen Farbstoffe besitzen aber eine zu geringe Löslichkeit für die Anwendung in Tinten für moderne Tintenstrahldrucker.

Der Azofarbstoff der Formel (2) 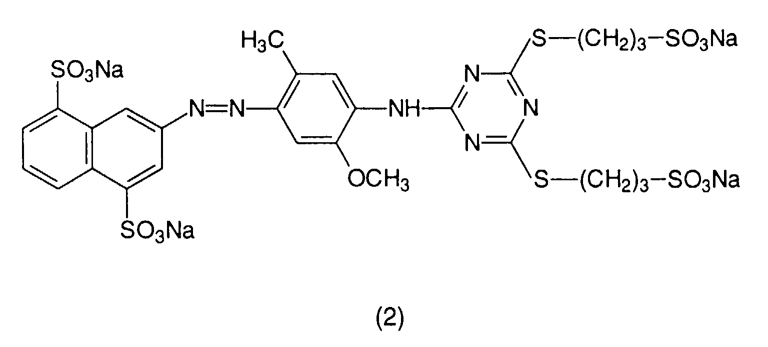 wurde in der Patentanmeldung EP 0'755'984 (Farbstoff Nr. 100) beschrieben. Die sehr gute Wasserlöslichkeit des Azofarbstoffs der Struktur (2) und ähnlicher Farbstoffe wurde auf die Einführung des Strukturelements (3) 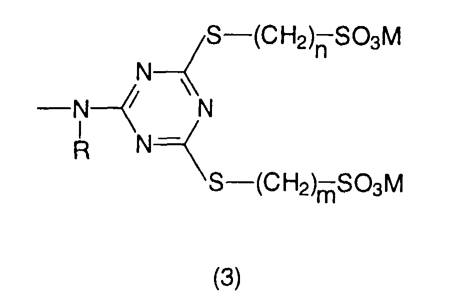 zurückgeführt, worin R für Wasserstoff oder Alkyl mit 1 bis 6 C-Atomen steht; M für Wasserstoff, ein Metallatom, Ammonium oder ein substituiertes Ammonium, in dem der Substituent aus der Gruppe bestehend aus Alkyl, Alkoxyalkyl oder Hydroxyalkyl mit jeweils 1 bis 12 C-Atomen ausgewählt wird; und n und m unabhängig voneinander einen Wert zwischen 2 und 6 annehmen.
Farbstoffe mit dem vorhin erwähnten Strukturelement (3) zeigen aber in der Praxis den Nachteil, dass sie sind nicht besonders hydrolysestabil sind und deshalb solche Farbstoffe enthaltende Tinten über längere Zeit nicht genügend lagerstabil sind. Sie vermögen deshalb nicht alle nötigen Anforderungen zu erfüllen, wenn sie in Tinten für den Tintenstrahldruck eingesetzt werden.

Farbstoffe für Tinten für den Tintenstrahldruck müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit und einer ausgezeichneten Lichtechtheit ergeben. Sie müssen in der Tinte stabil sein, auch wenn diese lange Zeit unter ungünstigen Bedingungen gelagert wird.
Verschiedene Zusammensetzungen für Tinten sind vorgeschlagen worden. Typische Tinten enthalten einen oder mehrere Farbstoffe, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit hervorragender Wasserfestigkeit.
(3) Die Tinte ergibt Bilder mit hervorragender Lichtbeständigkeit.
(4) Die Tinte ergibt Bilder mit hervorragender Abriebfestigkeit.
(5) Die Tinte verstopft die Tintenstrahldruckerdüsen nicht, auch wenn diese längere Zeit während Druckpausen nicht abgedeckt sind.
(6) Die Tinte kann lange Zeit gelagert werden, ohne dass ihre Qualität abnimmt.
(7) Die physikalischen Eigenschaften der Tinte, wie Viskosität, Leitfähigkeit und Oberflächenspannung liegen alle innerhalb vorgegebener Grenzen.
(8) Die Tinte muss ungiftig, unbrennbar und unschädlich sein.

### Beschreibung der Erfindung

Ziel der Erfindung ist die Bereitstellung neuer Azofarbstoffe, die eine hohe Löslichkeit und eine ausgezeichnete Hydrolysestabilität in wässrigen Tinten, insbesondere für den Tintenstrahldruck, aufweisen. Die diese erfindungsgemässen Farbstoffe enthaltenden Bilder zeigen eine hohe optische Dichte, eine ausgezeichnete Wasserfestigkeit, eine ausgezeichnete Lichtechtheit und eine ausgezeichnete Abriebfestigkeit.
Ein anderes Ziel der Erfindung ist die Bereitstellung von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger qualitätsmässig hervorragende Bilder ergeben. Ein weiteres Ziel der Erfindung ist die Bereitstellung von Tinten, die alle anderen vorhin erwähnten Anforderungen ebenfalls erfüllen.

Die vorliegende Erfindung bezieht sich auf neue Azofarbstoffe mit einem Strukturelement der allgemeinen Formel (4), die eine sehr hohe Löslichkeit und gleichzeitig eine hervorragende Hydrolysestabilität besitzen, 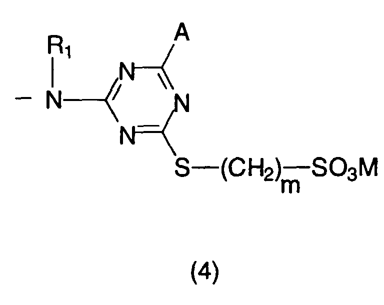 worin
- A: für NR₃R₄ steht, worin R₃ und R₄ unabhängig voneinander Wasserstoff; Alkyl mit 1 bis 6 C-Atomen; Aralkyl; Aryl oder substituiertes Aryl, wobei die Substituenten aus der Gruppe bestehend aus COOM, Cl, Br or SO₃M ausgewählt werden; bedeuten, oder worin R₃ und R₄ einen Ring mit oder ohne Heteroatom bilden;
oder
für OR₂ steht und R₂ Wasserstoff oder Alkyl mit 1 bis 8 C-Atomen bedeutet;
- m: einen Wert zwischen 2 und 6 annimmt;
- R₁: für Wasserstoff oder Alkyl mit 1 bis 6 C-Atomen steht;
und
- M: für Wasserstoff, ein Metallatom, Ammonium oder ein substituiertes Ammonium, in dem der Substituent aus der Gruppe bestehend aus Alkyl, Alkoxyalkyl oder Hydroxyalkyl mit jeweils 1 bis 12 C-Atomen oder Phenyl ausgewählt wird; Guanidinium oder ein substituiertes Guanidinium, in dem der Substituent aus der Gruppe bestehend aus Alkyl mit 1 bis 12 C-Atomen oder Phenyl ausgewählt wird, steht.

Die Verbindungen mit dem Strukturelement der allgemeinen Formel (4) können als freie Säuren oder als anorganische oder organische Salze dieser Säuren vorliegen. Vorzugsweise liegen sie in Form ihrer Alkali- oder Ammonium- oder Guanidinium-Salze vor, wobei das Ammoniumkation oder Guanidiniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium und Tetraalkylammonium wie z. B. Tetramethylammonium oder Tetrabutylammonium. Ein Beispiel eines substituierten Guanidiniums ist Diphenylguanidinium.

Weiter betrifft die Erfindung nicht nur reine Farbstoffe mit dem Strukturelement der allgemeinen Formel (4), sondern auch Gemische dieser Verbindungen.

Bevorzugt sind Farbstoffe der Formel (20) 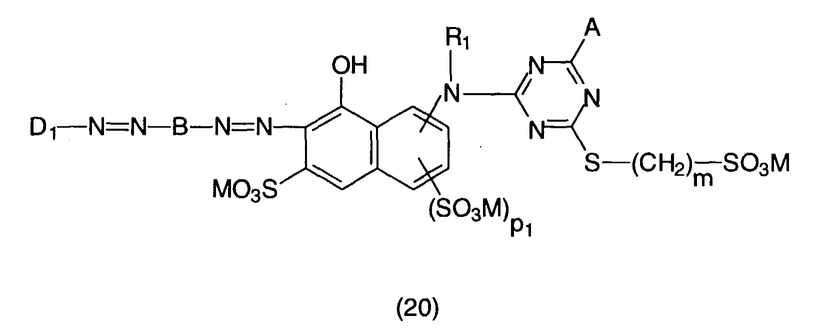 worin
A, m, R₁ und M die vorhin angegebene Bedeutung haben;
- B: einen der folgenden Reste bedeutet, 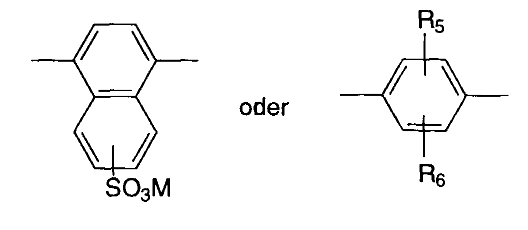
worin
- R₅, R₆: unabhängig voneinander für Wasserstoff, Alkyl oder Alkoxy mit je 1 bis 4 C-Atomen, Chlor, Brom, Carboxy oder Sulfo stehen;
- D₁: für Phenyl oder einfach oder zweifach substituiertes Phenyl, wobei die Substituenten aus der Gruppe bestehend aus Alkyl, Alkoxy, Chlor, Brom, Carboxy und Sulfo ausgewählt werden, oder unsubstituiertes oder mit 1 oder 2 Sulfogruppen substituiertes Naphthyl steht;
und
- p₁: 0 oder 1 ist;
oder Farbstoffe der Formel (21) 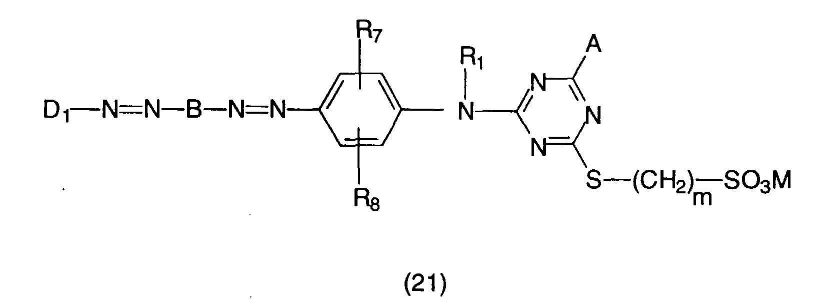 worin
A, m, R₁, M, D₁ und B die vorhin angegebene Bedeutung haben;
und
- R₇, R₈: unabhängig voneinander für Wasserstoff, Alkyl oder Alkoxy oder Acylamino mit bis zu 3 C-Atomen stehen;
oder Farbstoffe der Formel (22) 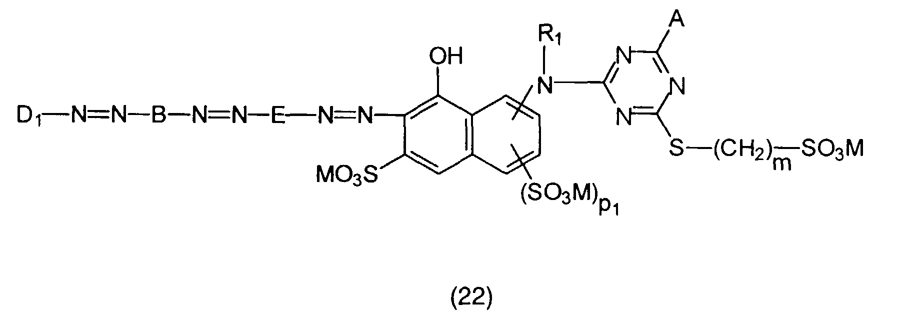 worin
A, m, R₁, M, D₁, B, p₁ und M vorhin angegebene Bedeutung haben;
und
- E: für Phenylen oder einfach oder zweifach substituiertes Phenylen, wobei die Substituenten aus der Gruppe bestehend aus Alkyl, Alkoxy, Chlor, Brom, Carboxy und Sulfo ausgewählt werden, oder unsubstituiertes oder einfach oder zweifach substituiertes Naphthylen, wobei die Substituenten aus der Gruppe bestehend aus Sulfo, Hydroxy und Amino ausgewählt werden, steht;
oder Farbstoffe der Formel (23) 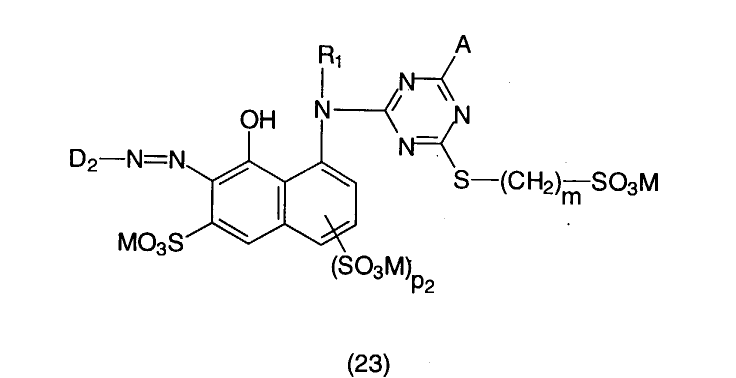 worin
- A, m, R₁ und M: vorhin angegebene Bedeutung haben;
- D₂: für Phenyl oder einfach oder zweifach substituiertes Phenyl, wobei die Substituenten aus der Gruppe bestehend aus Alkyl, Alkoxy, Chlor, Brom, Carboxy und Sulfo ausgewählt werden, oder unsubstituiertes oder mit 1 oder 2 Sulfogruppen substituiertes Naphthyl steht;
und
- p₂: 0 oder 1 ist;
oder Farbstoffe der Formel (24) 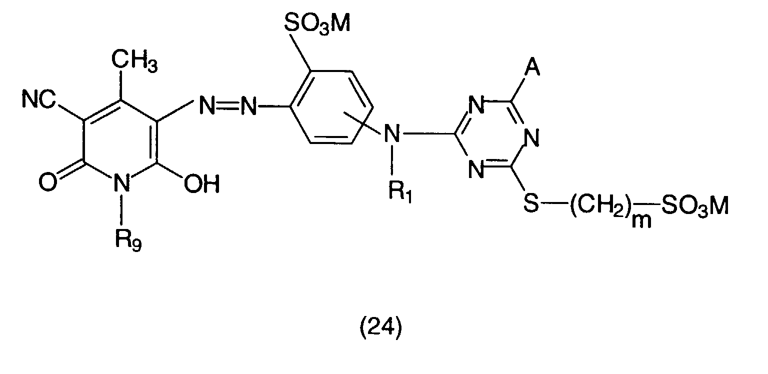 worin
A, m, R₁ und M vorhin angegebene Bedeutung haben;
und
- R₉: für Wasserstoff, Alkyl mit 1 bis 6 C-Atomen, substituiertes Alkyl mit 2 bis 6 C-Atomen, wobei die Substituenten aus der Gruppe bestehend aus Carboxy, Hydroxy und Sulfo ausgewählt werden, Phenyl oder substituiertes Phenyl, wobei die Substituenten aus der Gruppe bestehend aus Methyl, Chlor, Brom und Sulfo ausgewählt werden, steht;
oder Farbstoffe der Formel (25) 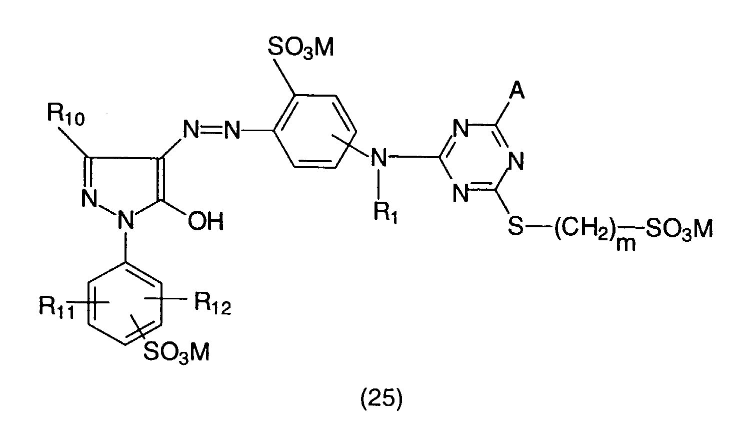 worin
A, m, R₁ und M vorhin angegebene Bedeutung haben;
- R₁₀: für CH₃, COOH oder NHCOCH₃ steht;
und
- R₁₁, R₁₂: unabhängig voneinander für Wasserstoff, Chlor, Brom oder Methyl stehen;
oder Farbstoffe der Formel (26) 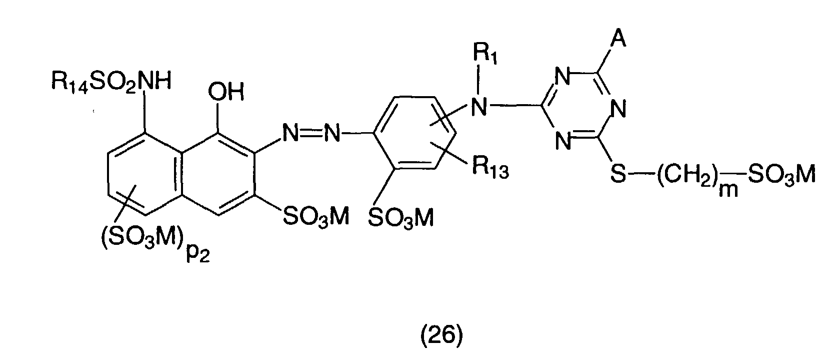 worin
A, m, R₁ und M vorhin angegebene Bedeutung haben;
- R₁₃: für Wasserstoff, Alkyl oder Alkoxy mit je bis zu 3 C-Atomen steht;
- R₁₄: für Alkyl mit 1 bis 8 C-Atomen, Phenyl oder einfach oder mehrfach substituiertes Phenyl steht, wobei die Substituenten aus der Gruppe bestehend aus Chlor, Brom, Alkyl und Alkoxy mit je 1 bis 4 C-Atomen ausgewählt werden;
und
- p₂: 0 oder 1 ist;
oder Farbstoffe der Formel (27) 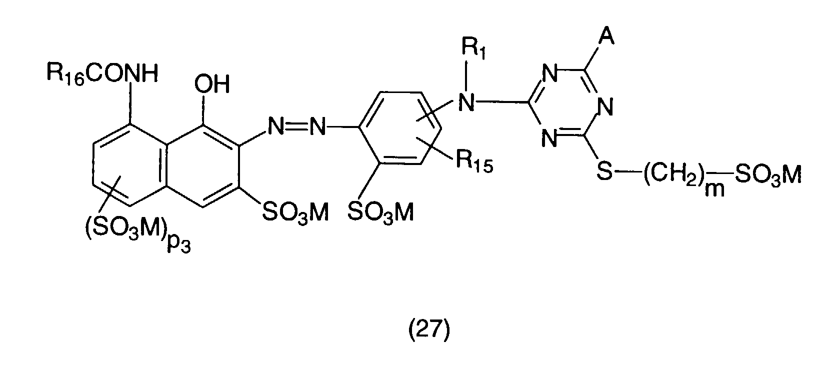 worin
A, m, R₁ und M vorhin angegebene Bedeutung haben;
- R₁₅: für Wasserstoff, Alkyl oder Alkoxy mit bis zu 3 C-Atomen steht;
- R₁₆: für Alkyl mit 1 bis 8 C-Atomen, substituiertes Alkyl mit 1 bis 6 C-Atomen, wobei die Substituenten aus der Gruppe bestehend aus COOCH₃, COOH und Halogen ausgewählt werden, Phenyl oder einfach oder mehrfach substituiertes Phenyl, wobei die Substituenten aus der Gruppe bestehend aus Chlor, Brom, Alkyl, Alkoxy, Alkylcarbonylamino und Alkylsulfonyl mit je 1 bis 4 C-Atomen ausgewählt werden, oder Pyridin steht;
und
- p₃: 0 oder 1 ist;
oder Farbstoffe der Formel (28) 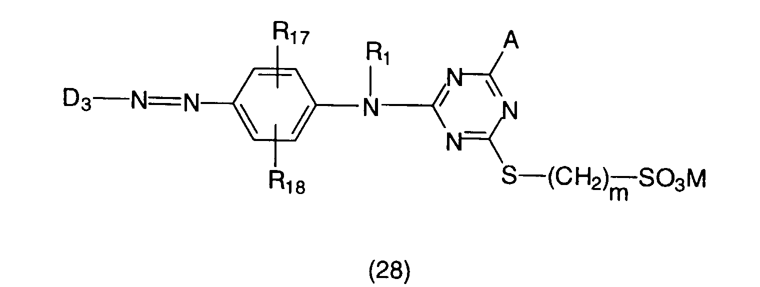 worin
A, m, R₁ und M vorhin angegebene Bedeutung haben;
- D₃: für Phenyl oder einfach oder zweifach substituiertes Phenyl steht, wobei die Substituenten aus der Gruppe bestehend aus Sulfo, Chlor, Brom, Carboxy, Alkyl und Alkoxy ausgewählt werden;
und
- R₁₇, R₁₈: unabhängig voneinander für Wasserstoff, Chlor, Brom, Ureido, Alkyl, Alkoxy oder Acylamino mit je bis zu 3 C-Atomen stehen;
oder Farbstoffe der Formel (29) 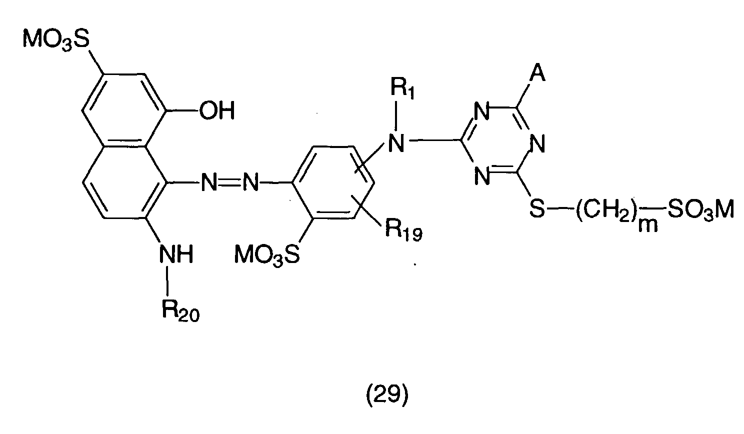 worin
A, m, R₁ und M vorhin angegebene Bedeutung haben;
- R₁₉: für Wasserstoff, Alkyl oder Alkoxy mit bis zu 3 C-Atomen steht; und
- R₂₀: für Wasserstoff, Alkyl mit 1 bis 6 C-Atomen, substituiertes Alkyl mit 2 bis 6 C-Atomen, wobei die Substituenten aus der Gruppe bestehend aus CN, COOH, OH, COOCH₃, COOCH₂CH₃ und COCH₃ ausgewählt werden, Phenyl oder substituiertes Phenyl, wobei die Substituenten aus der Gruppe bestehend aus Methyl, Chlor und Brom ausgewählt werden, steht;
oder Farbstoffe der Formel (30) 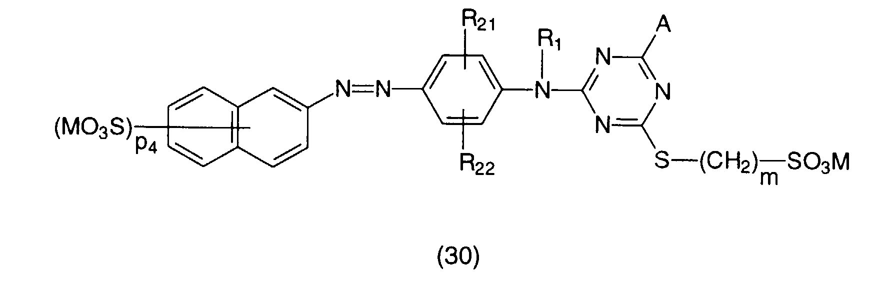 worin
A, m, R₁ und M vorhin angegebene Bedeutung haben;
- R₂₁, R₂₂: unabhängig voneinander für Wasserstoff, Chlor, Brom, Ureido, Alkyl, Alkoxy oder Acylamino mit je bis zu 3 C-Atomen stehen;
und
- p₄: 1, 2 oder 3 ist und die SO₃M-Gruppe in den Stellungen 1 oder 4 oder 5 oder 6 oder 7 oder 8 steht, wenn p₄ den Wert 1 hat; oder die SO₃M-Gruppen in den Stellungen 4 und 8 oder 5 und 7 oder 6 und 8 oder 1 und 5 stehen, wenn p4 den Wert 2 hat; oder die SO₃M-Gruppen in den Stellungen 3 und 6 und 8 oder 4 und 6 und 8 stehen, wenn p₄ den Wert 3 hat.

Beispiele für Monoazofarbstoffe mit dem Strukturelement der allgemeinen Formel (4) sind die folgenden:

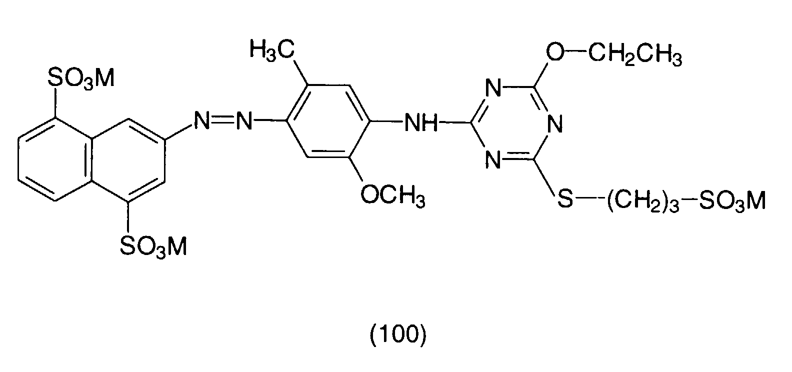

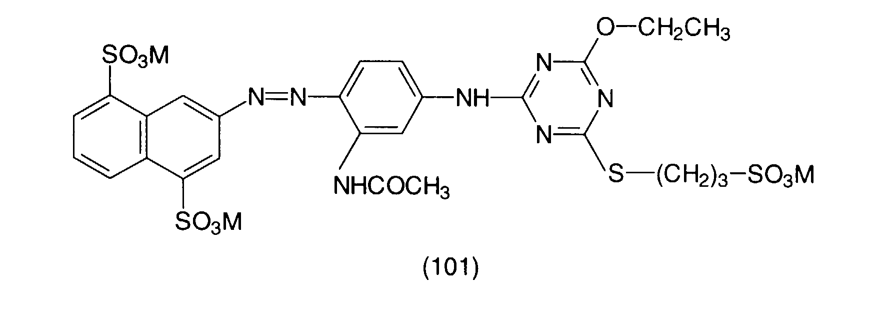

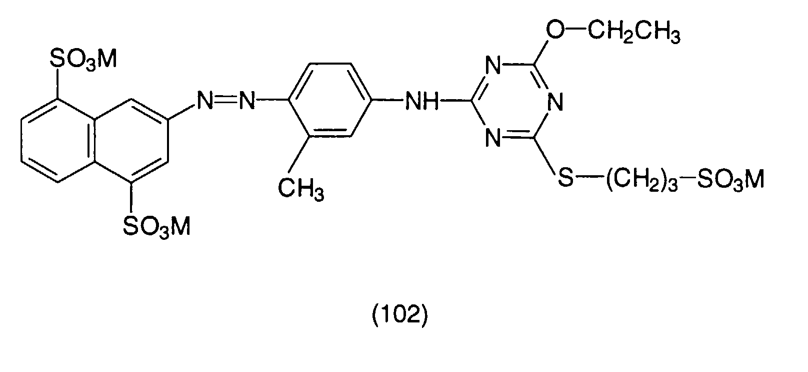

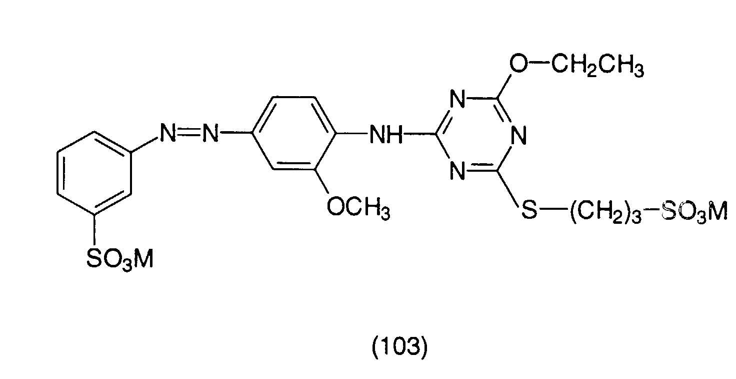

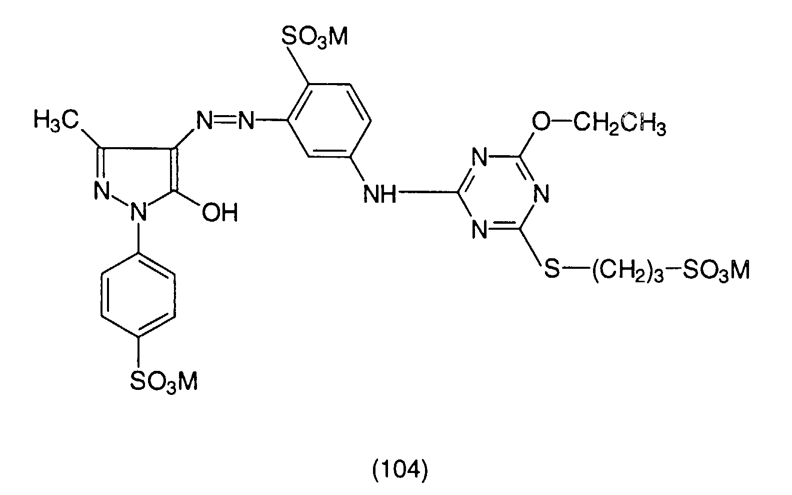

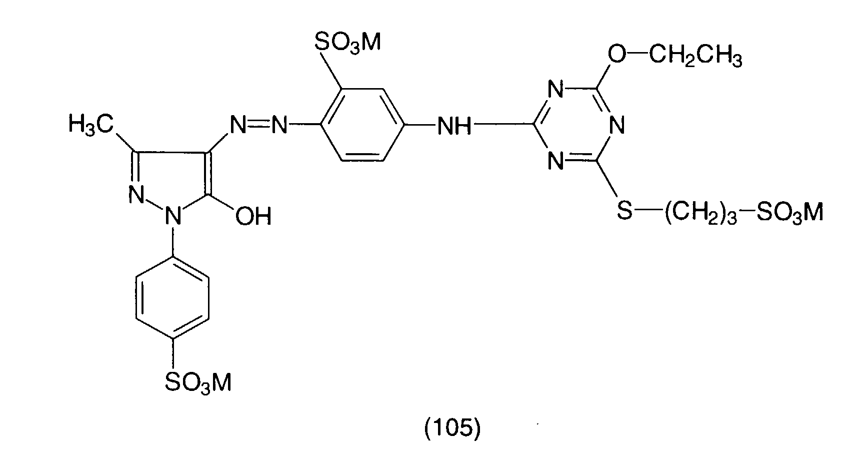

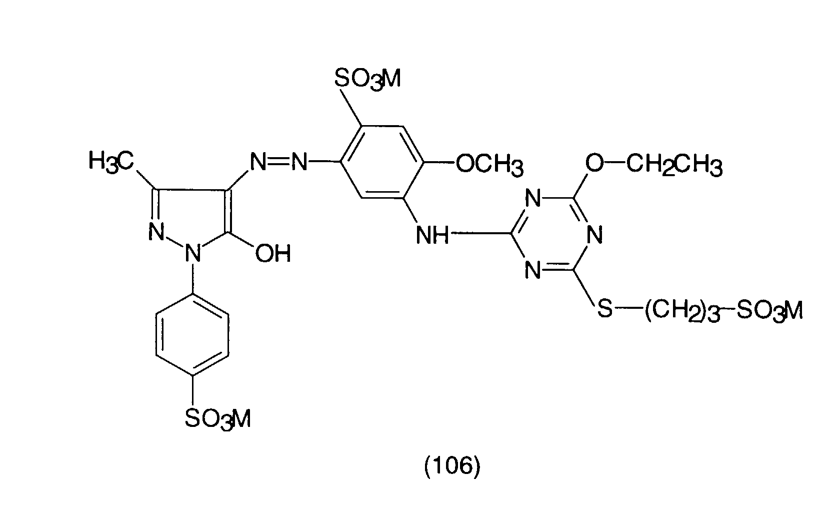

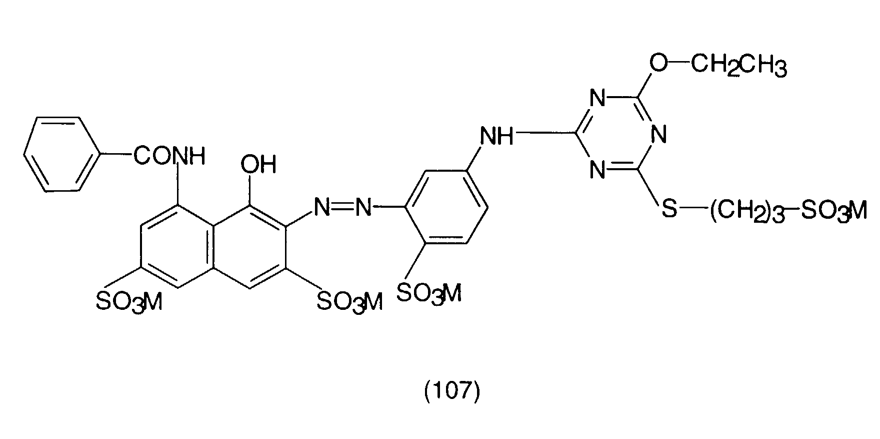

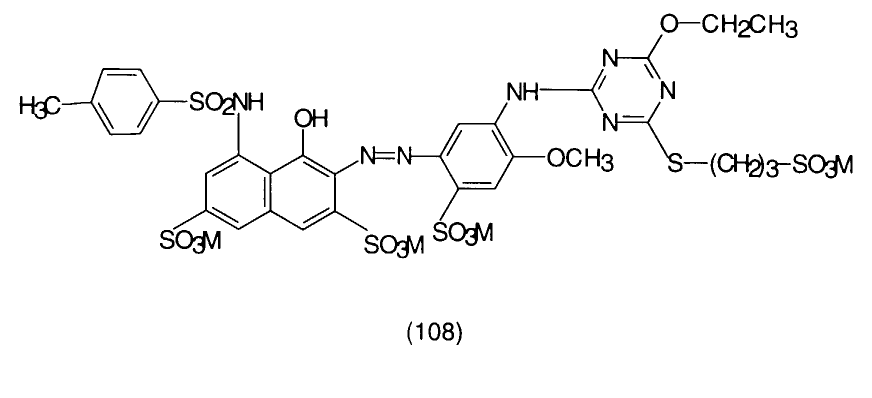

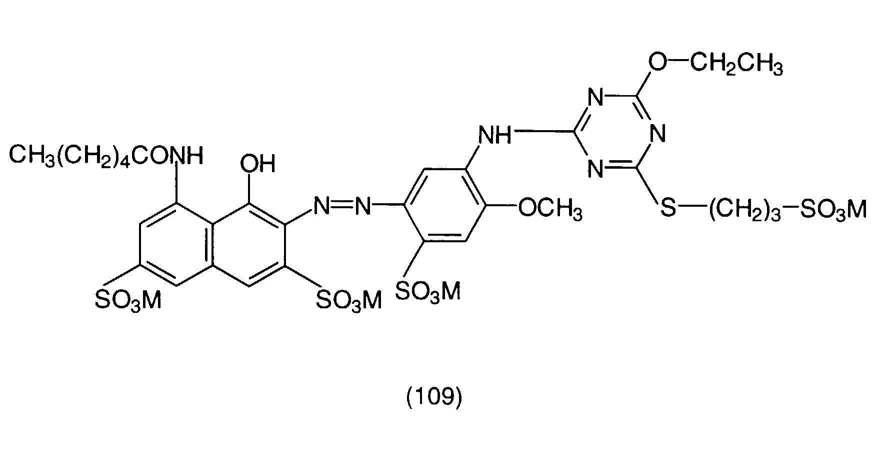

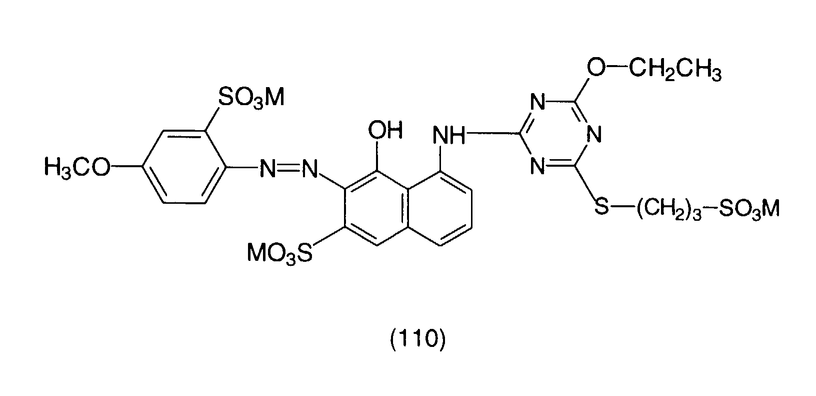

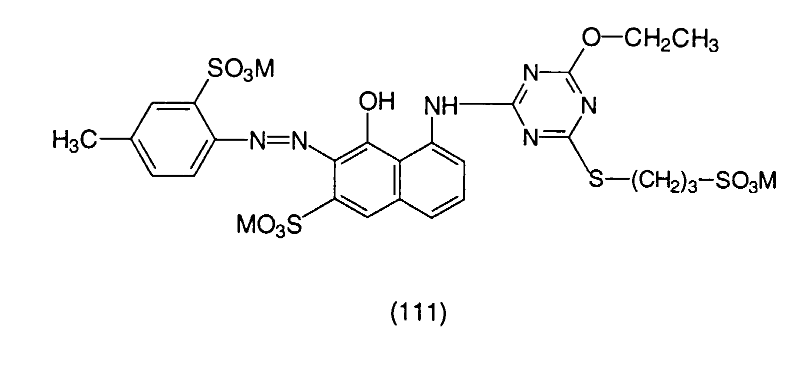

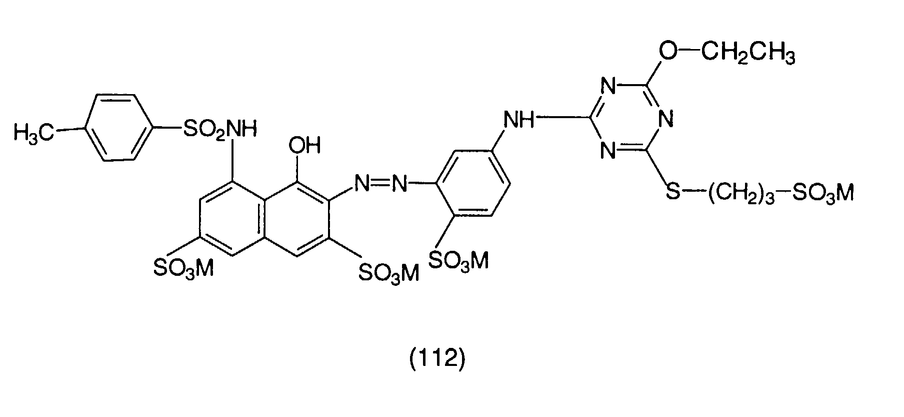

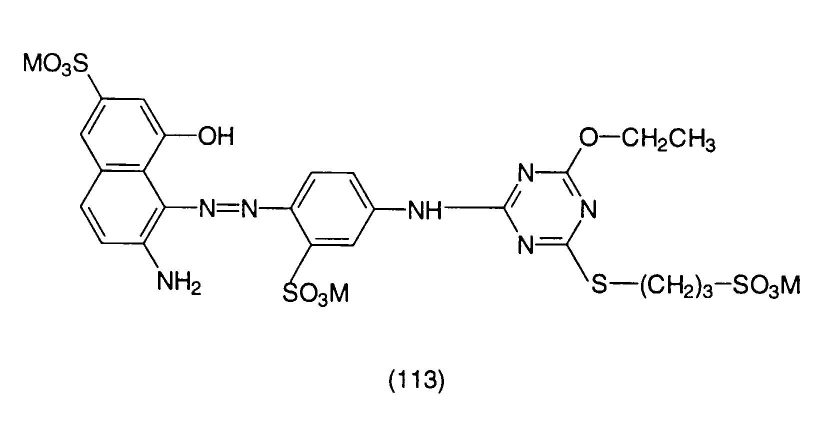

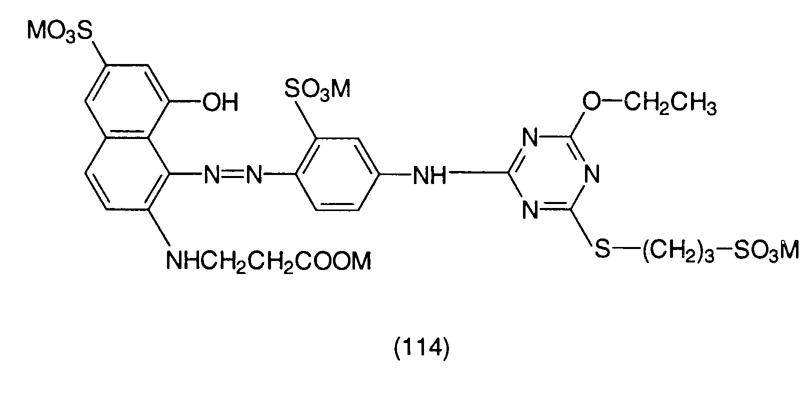

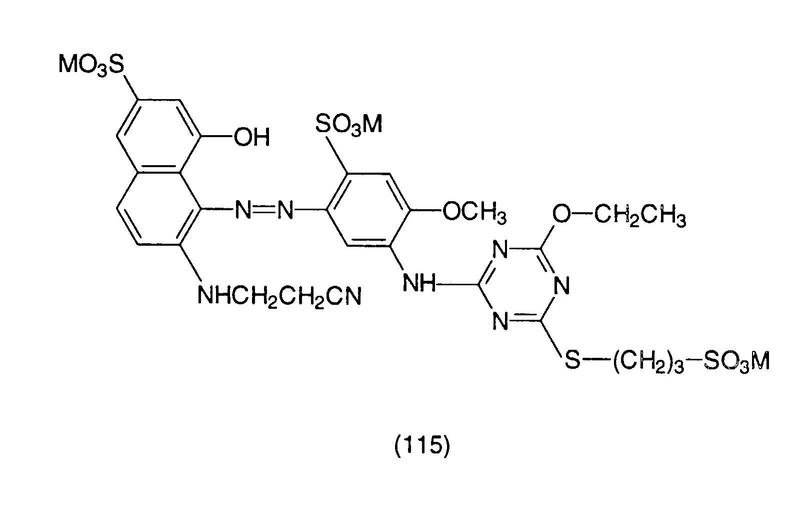

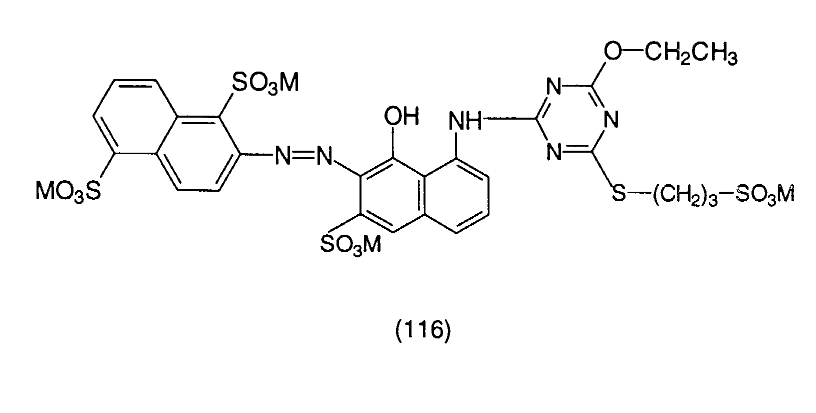

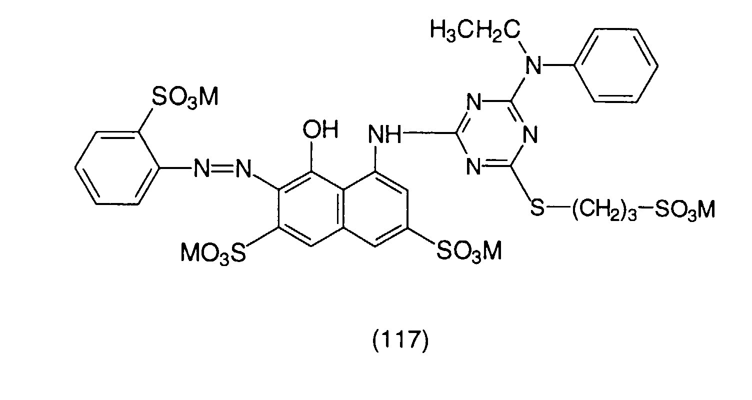

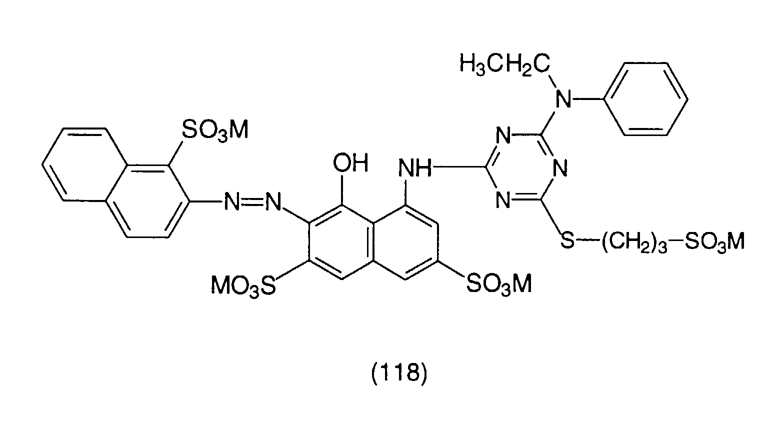

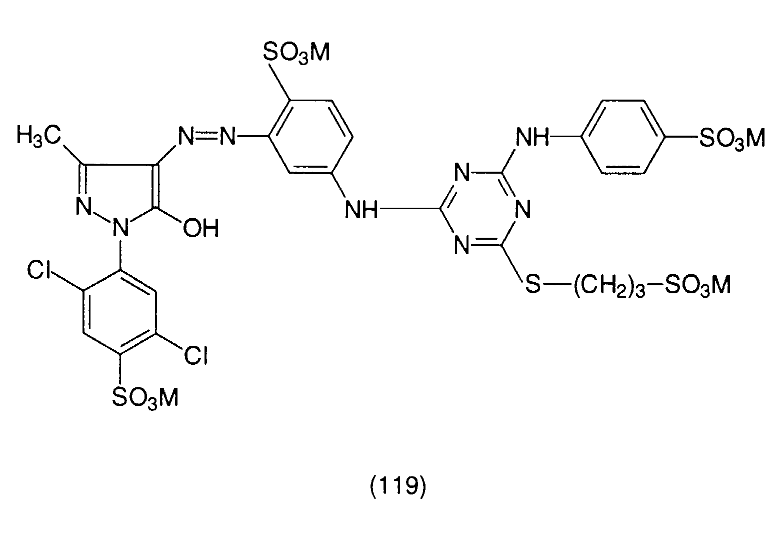

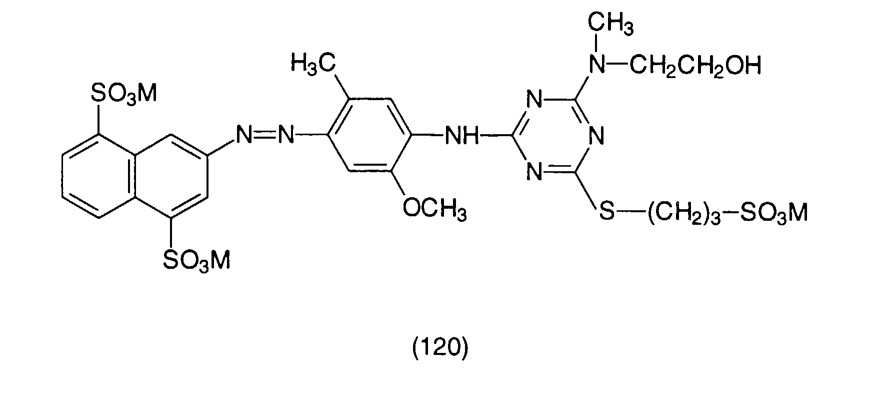

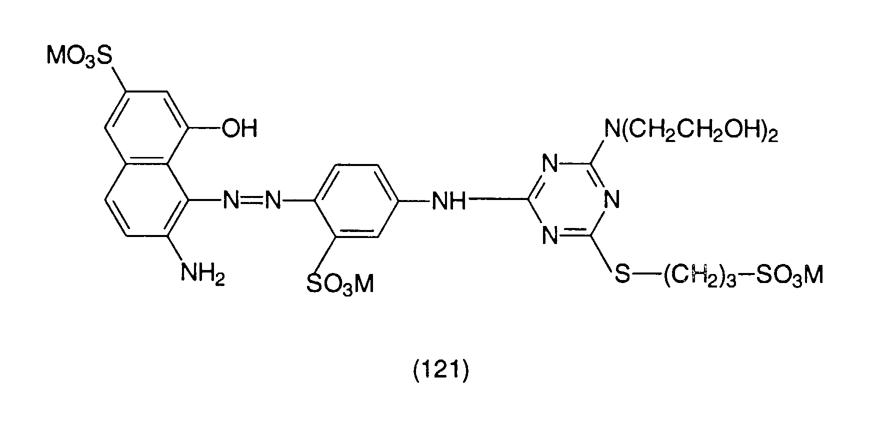

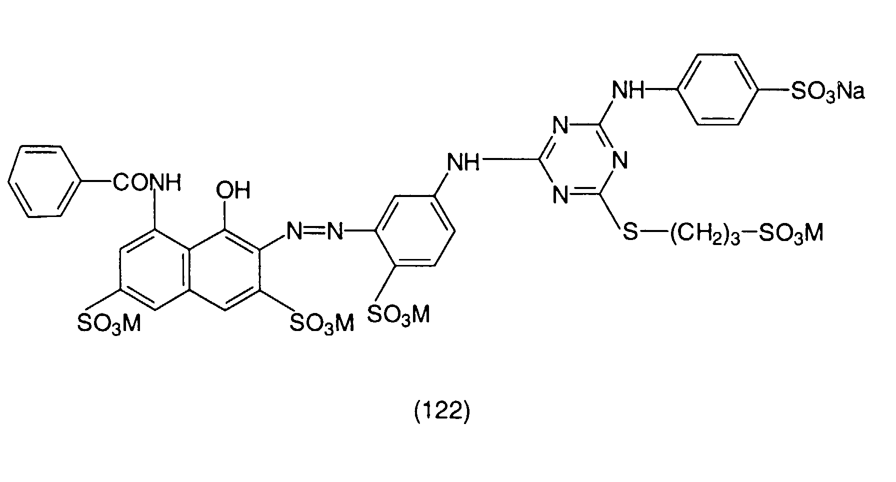

Beispiele für Polyazofarbstoffe mit dem Strukturelement der allgemeinen Formel (4) sind die folgenden:

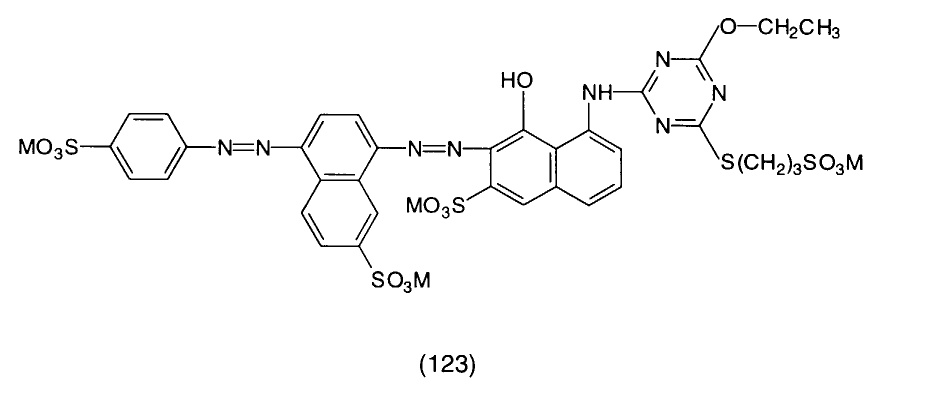

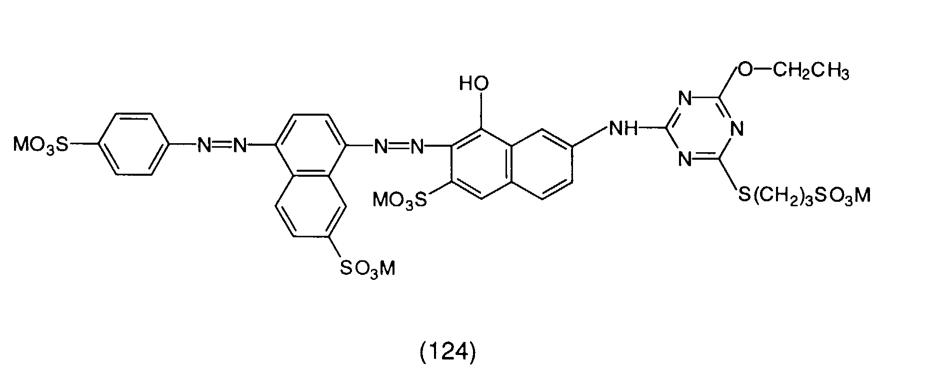

Die Erfindung betrifft weiterhin ein Verfahren zur Herstellung der Azofarbstoffe mit dem Strukturelement der allgemeinen Formel (4), das dadurch gekennzeichnet ist, dass
(i) eine Verbindung der Formel (5) mit dem Strukturelement der allgemeinen Formel (4) 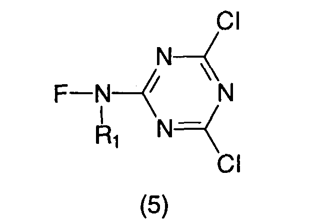 worin R1 die vorhin angegebene Bedeutung hat,
   und
   F eines der Farbstoffradikale aus den Formeln (20) bis (30) ist,
   mit einer Verbindung der Formel (6) 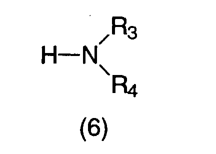 worin R₃ und R₄ die vorhin angegebene Bedeutung haben, unter Bedingungen umgesetzt wird, dass eines der Chloratome des Dichlortriazins der Formel (5) durch die Verbindung der Formel (6) ersetzt wird;
   oder
   eine Verbindung der Formel (7) 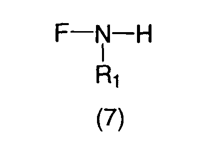 worin R1 und F die vorhin angegebene Bedeutung haben, mit einer Verbindung der Formel (8) 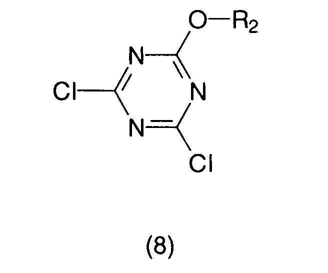 worin R₂ die vorhin angegebene Bedeutung hat, unter Bedingungen umgesetzt wird, dass eines der Chloratome des Dichlortriazins der Formel (8) durch die Verbindung der Formel (7) ersetzt wird; und
(ii) das disubstituierte Triazin mit einer Verbindung der Formel (9) 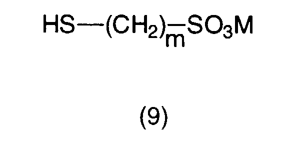 worin m die vorhin angegebene Bedeutung hat, unter Bedingungen umgesetzt wird, dass das dritte Chloratom des Triazinrings durch die Verbindung der Formel (9) ersetzt wird.

Die erfindungsgemässen Farbstoffe mit dem Strukturelement der allgemeinen Formel (4) färben cellulosehaltige Materialien, Papier, Baumwolle, Viskose sowie Leder und Wolle mit guten Nass- und Lichtechtheiten.
Die Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehvefahren oder im kontinuierlichen Verfahren angewandt werden.

Die Erfindung betrifft weiter flüssige Farbstoffpräparationen enthaltend mindestens einen Farbstoff mit dem Strukturelement der allgemeinen Formel (4). Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs.

Farbstoffe oder Mischungen von Farbstoffen mit dem Strukturelement der allgemeinen Formel (4) sind ausgezeichnete Farbstoffe zur Herstellung von Tinten für den Tintenstrahldruck.
Eine solche Tinte enthält eine oder mehrere der erfindungsgemässen Verbindungen in einem flüssigen wässrigen Lösungsmittel. Die Tinte enthält 0,5 bis 20 Gewichtsprozent, vorzugsweise 0,5 bis 5 Gewichtsprozent dieser Verbindungen, bezogen auf das Gesamtgewicht der Tinte. Das flüssige Lösungsmittel besteht vorzugsweise aus Wasser oder aus einer Mischung von Wasser und wasserlöslichen oder mit Wasser mischbaren organischen Lösungsmitteln. Geeignete Lösungsmittel sind z. B. in den Patenten US 4'626'284, US 4'703'113, US 4'963'189, den Patentanmeldungen GB 2'289'473, EP 0'425'150 und EP 0'597'672 beschrieben.

Die vorliegende Erfindung wird durch die folgenden Beispiele näher beschrieben, ohne dass dadurch die beanspruchten Verbindungen in irgendeiner Weise eingeschränkt werden.

### Beispiele

### Beispiel 1

Das Natriumsalz des Farbstoffs (100) wurde folgendermassen hergestellt: 62.4 g (0.126 Mol) der Monoazoverbindung der Formel (10), 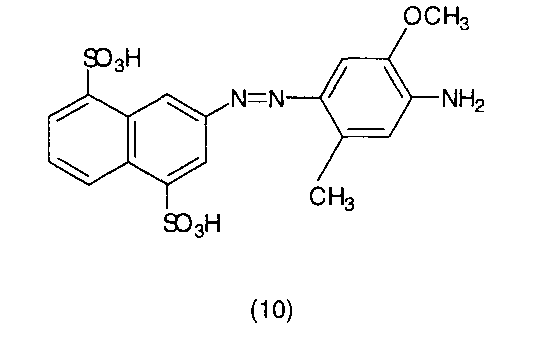 die nach der Vorschrift im Patent US 3'264'109 hergestellt worden war, wurde zu 250 ml Wasser zugegeben und der pH-Wert durch Zugabe von Natronlauge (30 %) auf 6.5 eingestellt. Dazu wurden 11.7 g (0.139 Mol) Natriumhydrogencarbonat hinzugefügt und anschliessend eine Lösung von 26.8 g (0.138 Mol) 2,4-Dichlor-6-ethoxy-1,3,5-triazin in 60 ml Ethylacetat zugetropft. Das Reaktionsgemisch wurde 1 Stunde bei einer Temperatur zwischen 20° C und 25° C gerührt. Nachher wurden 14.7 g (0.139 Mol) Natriumcarbonat und 24.8 g (0.139 Mol) des Natriumsalzes der 3-Mercapto-1-propansulfonsäure in 50 ml Wasser zugegeben und das Reaktionsgemisch 2 Stunden bei einer Temperatur von 70° C gerührt. Anschliessend wurden 0.7 ml Essigsäure zugegeben, um den pH-Wert 6.0 zu erreichen. Nach der Zugabe von 900 ml Ethanol wurde der gebildete Niederschlag abfiltriert, mit 150 ml Ethanol gewaschen und im Vakuum bei 60° C getrocknet. Man erhielt so 110 g des Gelbfarbstoffs der Formel (100).

Auf ähnliche Art und Weise können durch die Wahl geeigneter Ausgangsmaterialien die Farbstoffe (101) bis (116) hergestellt werden.

Die so hergestellten erfindungsgemässen Farbstoffe sind in Tabelle 1 zusammen mit der Lage ihres Absorptionsmaximums zusammengestellt.

**Tabelle 1**

| Farbstoff | M | λmax (nm) in H2O |
|---|---|---|
| (100) | Na | 402 |
| (101) | Na | 393 |
| (102) | Na | 382 |
| (103) | Na | 378 |
| (104) | Na | 391 |
| (105) | Na | 420 |
| (106) | K | 432 |
| (107) | Na | 534 |
| (108) | Na | 531 |
| (109) | Na | 532 |
| (110) | Na | 529 |
| (111) | Na | 519 |
| (112) | Na | 527 |
| (113) | Na | 514 |
| (114) | Na | 535 |
| (115) | Na | 542 |
| (116) | Na | 519 |

### Beispiel 2

Das Natriumsalz des Farbstoffs (117) wurde folgendermassen hergestellt: 48.6 g (0.02 Mol) einer wässrigen Lösung (ca. 33 %) der Monoazoverbindung der Formel (11), 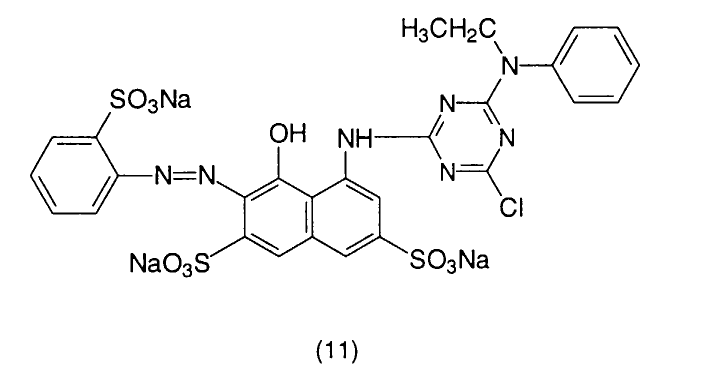 die bei Ciba Spezialitätenchemie, Basel, Schweiz erhältlich ist, wurden zu 50 ml Wasser zugegeben. Zu dieser Mischung wurden 5.4 g (0.030 Mol) des Natriumsalzes der 3-Mercapto-1-propansulfonsäure in 20 ml Wasser zugegeben und das Reaktionsgemisch 2 Stunden bei einer Temperatur von 70° C gerührt. Nach Abkühlung auf Raumtemperatur wurden 0.7 ml Essigsäure zugegeben, um den pH-Wert 6.0 zu erreichen. Nach der Zugabe von 900 ml Ethanol wurde der gebildete Niederschlag abfiltriert, mit 150 ml Ethanol gewaschen und im Vakuum bei 60° C getrocknet. Man erhielt so 8.7 g des Purpurfarbstoffs der Formel (117).

Auf ähnliche Art und Weise können durch die Wahl geeigneter Ausgangsmaterialien die Farbstoffe (118) bis (122) hergestellt werden.

Die so hergestellten erfindungsgemässen Farbstoffe sind in Tabelle 2 zusammen mit der Lage ihres Absorptionsmaximums zusammengestellt.

**Tabelle 2**

| Farbstoff | M | λmax (nm) in H₂O |
|---|---|---|
| (117) | Na | 535 |
| (118) | Na | 547 |
| (119) | Na | 404 |
| (120) | Na | 408 |
| (121) | K | 517 |
| (122) | Na | 517 |

### Herstellungsbeispiel für Tinten

Die vorliegende Erfindung wird, soweit sie sich auf Tinten bezieht, durch die folgenden Beispiele beschrieben, in denen erfindungsgemässe Farbstoffe und Farbstoffe des bisherigen Stands der Technik eingesetzt werden.
100 g jeder Tinte wurden hergestellt, indem die benötigten Komponenten aus Tabelle 2 (alle Mengen sind in g angegeben) zusammen mit Wasser etwa 1 Stunde unter Rühren auf 50° C erwärmt wurden. Die erhaltene Lösung wurde auf 20° C abgekühlt, der pH-Wert auf 7.5 eingestellt und anschliessend durch ein Millipore®-Filter mit 0.5 µm Porendurchmesser filtriert.

Die Tinten der Beispiele 5 bis 10 in Tabelle 3 enthalten erfindungsgemässe Farbstoffe, während die Beispiele C-11 und C-12 Farbstoffe des Standes der Technik enthalten.

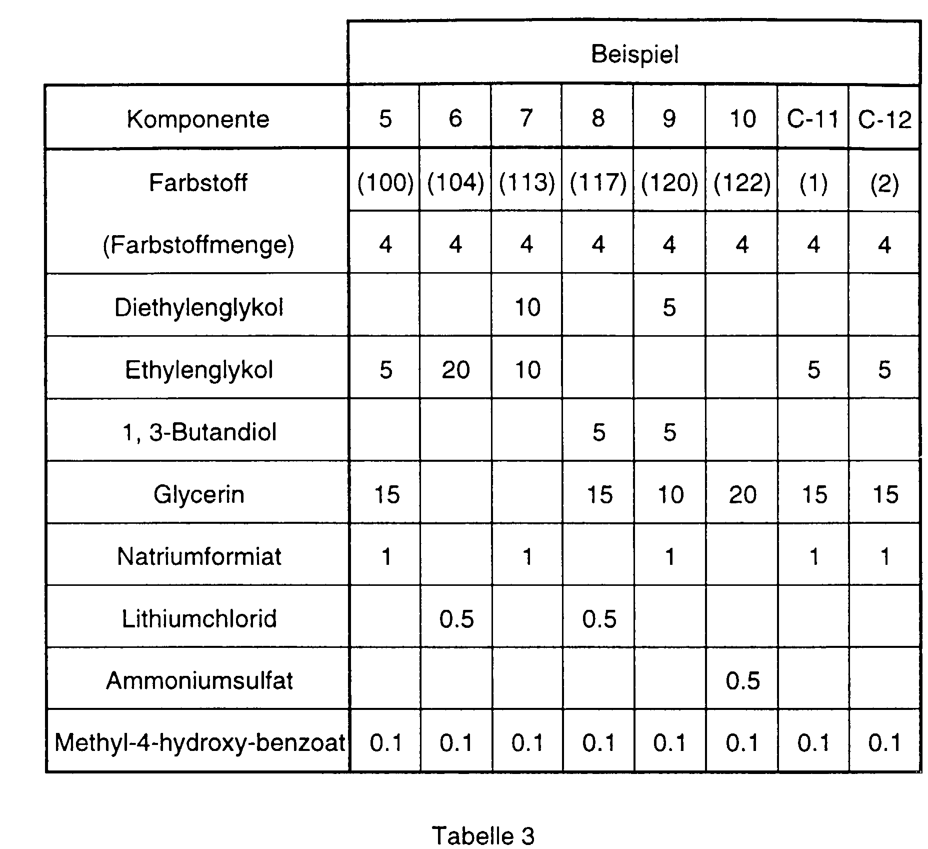

### Anwendungsbeispiele von Tinten

Ein Aufnahmematerial für Prüfzwecke wurde folgendermassen hergestellt:
30 g Gelatine mit hohem isoelektrischem Punkt (Typ St 70'810, erhältlich bei Deutsche Gelatinefabriken, Eberbach, Deutschland) wurden in 360 ml deionisiertem Wasser gelöst. Zu dieser Lösung wurde 1 g eines oberflächenaktiven Stoffes (Olin 10G, erhältlich bei Olin Corporation, Norwalk, USA) zugegeben. Unmittelbar vor dem Guss wurden 6.6 g einer Lösung von 2-(4-Di-methyl-carbamoyl-pyridino)-ethan-sulfonat (3%) zugegeben und der pH-Wert auf 6.5 eingestellt. 100 g/m² dieser Lösung wurden anschliessend mittels eines Stabgiessers auf polyethylenbeschichtetes Papier gegossen. Das so hergestellte Aufnahmematerial wurde 12 Stunden getrocknet,

Die Tinten wurden anschliessend mit Hilfe eines IRIS-Tintenstrahldruckers des Typs 3024 auf dieses Aufnahmematerial aufgebracht, um ihre Eigenschaften während des Druckvorgangs zu prüfen wie auch die Qualität der so hergestellten Bilder.

### Prüfungen

Die Prüfverfahren für (A) Farbstofflöslichkeit, (B) Hydrolysestabilität, (C) Lagerstabilität, (D) Tintenstrahlstabilität, (E) Bildqualität, (F) Abriebfestigkeit, (G) Wasserbeständigkeit und (H) Lichtbeständigkeit sind die folgenden:

### (A) Farbstofflöslichkeit

Ein Farbstoffüberschuss wurde in deionisiertem Wasser aufgeschlämmt und diese Aufschlämmung wurde 1 Stunde bei 50° C gerührt. Anschliessend wurde auf 20° C abgekühlt, abzentrifugiert und durch ein Millipore®-Filter mit 0.5 µm Porendurchmesser filtriert. Die Farbstofflöslichkeit wurde spektroskopisch im Filtrat bestimmt.

### (B) Hydrolysestabilität

Es wurde eine wässrige Lösung (5 Gewichtsprozent) des Farbstoffs hergestellt und der pH-Wert dieser Lösung auf 7.0 eingestellt. Anschliessend wurden die Lösungen durch ein Millipore®-Filter mit 0.5 µm Porendurchmesser filtriert. Die filtrierte Farbstofflösung wurde 30 Tage auf 60° C erwärmt, anschliessend auf 20° C abgekühlt und der pH-Wert bestimmt. Mass der Hydrolysestabilität ist der Unterschied des pH-Wertes vor und nach der Lagerung.

### (C) Lagerstabilität

Die Tinten wurden in einer hermetisch verschlossenen Glasflasche 30 Tage bei einer Temperatur von 0° C gelagert. Anschliessend wurde die Niederschlagsmenge folgendermassen beurteilt:
- ⊕ :: Kein Niederschlag
- ◇ :: Wenig Niederschlag
- Ø:: Starker Niederschlag

### (D) Tintenstrahlstabilität

Die Tinten wurden während 100 Stunden ununterbrochen aus einer Düse des IRIS-Tintenstrahldruckers ausgestossen. Anschliessend wurde der Wechsel des Austrittswinkels des Tintenstrahles und der Zustand der Düse bestimmt und folgendermassen beurteilt:
- ⊕ :: Unverändert
- ◇ :: Leicht verändert
- ⌀ :: Stark verändert

### (E) Bildqualität

Die bedruckten Muster wurden in Bezug auf Schärfe und optische Dichte folgendermassen beurteilt:
- ⊕ :: Keine Unschärfe und hohe Dichte
- ◇ :: Geringe Unschärfe und hohe Dichte
- Ø:: Starke Unschärfe und tiefe Dichte

### (F) Abriebfestigkeit

Die Abriebfestigkeit der bedruckten Muster wurde dadurch bestimmt, dass ein Farbfeld hoher Dichte mit einem leicht feuchten Daumen gerieben wurde. Das Ausmass der Abriebfestigkeit wird folgendermassen angegeben:
- ⊕ :: Kein oder sehr wenig Abrieb
- ◇:: Mässiger Abrieb
- ⌀ :: Starker Abrieb

### (G) Wasserfestigkeit

Die bedruckten Muster wurden 1 Minute bei Raumtemperatur in deionisiertes Wasser gelegt. Anschliessend wurde das Ausbluten folgendermassen bestimmt:
- ⊕ :: Kein Ausbluten
- ◇ :: Geringes Ausbluten
- Ø:: Starkes Ausbluten

### (H) Lichtbeständigkeit

Die bedruckten Muster wurden in einem Atlas Ci35A Weather-O-Meter® mit einer 6500 W Xenon-Lampe so lange bestrahlt, bis 40 kJoule/cm² erreicht waren. Der Dichteverlust wurde mit einem X-Rite®- Densitometer gemessen folgendermassen beurteilt:
- ⊕ :: weniger als 10 % Dichteverlust
- Ø:: mehr als 10 % Dichteverlust

Die Farbstofflöslichkeit und die Hydrolysestabilität, die nach den oben angegebenen Verfahren bestimmt wurden, sind in Tabelle 4 angegeben.

**Tabelle 4**

| Farbstoff | Löslichkeit (in g per 100 ml) | pH-Änderung bei Lagerung |
|---|---|---|
| (100) | 32 | 0 |
| (113) | 32 | -0.1 |
| (120) | 34 | 0 |
| (121) | 38 | -0.1 |
| (1) | 12 | -0.2 |
| (2) | 34 | -0.5 |

Die erfindungsgemässen Farbstoffe (100), (113), (120) und (121) zeigen eine wesentlich bessere Löslichkeit als der bekannte Farbstoff (1) und eine wesentlich bessere Hydrolysestabilität als der bekannte Farbstoff (2) bei gleicher Löslichkeit, obwohl die erfindungsgemässen Farbstoffe eine Sulfogruppe weenthalten als der Farbstoff (2).

Die Ergebnisse der Prüfungen (C) bis (H) sind in Tabelle 5 zusammengestellt.

**Tabelle 6**

| Beispiel mit Farbstoff | Geprüfte Eigenschaft | | | | | |
|---|---|---|---|---|---|---|
| | (C) | (D) | (E) | (F) | (G) | (H) |
| (100) | ⊕ | ⊕ | ⊕ | ⊕ | ⊕ | ⊕ |
| (113) | ⊕ | ⊕ | ⊕ | ⊕ | ⊕ | ⊕ |
| (117) | ⊕ | ⊕ | ⊕ | ⊕ | ⊕ | Ø |
| (120) | ⊕ | ⊕ | ⊕ | ⊕ | ⊕ | ⊕ |
| (121) | ⊕ | ⊕ | ⊕ | ⊕ | ⊕ | ⊕ |
| (1) | ◇ | ◇ | ⊕ | ◇ | ◇ | ⊕ |
| (2) | ⊕ | ⊕ | ⊕ | ⊕ | ◇ | ⊕ |

Wie aus Tabelle 5 ersichtlich ist, sind die übrigen geprüften Eigenschaften der erfindungsgemässen Farbstoffe vergleichbar mit den gleichen Eigenschaften der Farbstoffe des Standes der Technik.

## Patentansprüche

1. Farbstoffe der Formel (20) 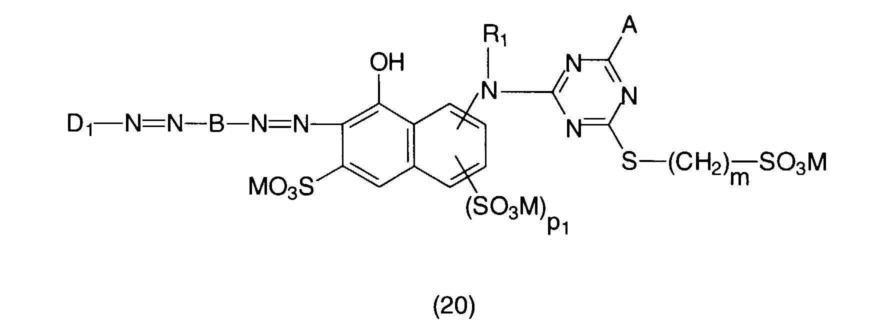 worin
R₁ für Wasserstoff oder Alkyl mit 1 bis 6 C-Atomen steht;
A für NR₃R₄ steht, worin R₃ und R₄ unabhängig voneinander Wasserstoff; Alkyl mit 1 bis 6 C-Atomen; Aralkyl; Aryl oder substituiertes Aryl, wobei die Substituenten aus der Gruppe bestehend aus COOM, Cl, Br oder SO₃M ausgewählt werden; bedeuten, oder worin R₃ und R₄ einen Ring mit oder ohne Heteroatom bilden;
oder
für OR₂ steht und R₂ Wasserstoff oder Alkyl mit 1 bis 8 C-Atomen bedeutet;
m einen Wert zwischen 2 und 6 annimmt;
M für Wasserstoff, ein Metallatom, Ammonium oder ein substituiertes Ammonium, in dem der Substituent aus der Gruppe bestehend aus Alkyl, Alkoxyalkyl oder Hydroxyalkyl mit jeweils 1 bis 12 C-Atomen und Phenyl ausgewählt wird, Guanidinium oder ein substituiertes Guanidinium in dem der Substituent aus der Gruppe bestehend aus Alkyl mit 1 bis 12 C-Atomen und Phenyl ausgewählt wird, steht;
B einen der folgenden Reste bedeutet, 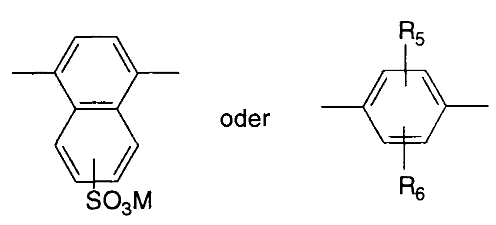
worin
R₅, R₆ unabhängig voneinander für Wasserstoff, Alkyl oder Alkoxy mit je 1 bis 4 C-Atomen, Chlor, Brom, Carboxy oder Sulfo stehen;
D₁ für Phenyl oder einfach oder zweifach substituiertes Phenyl, wobei die Substituenten aus der Gruppe bestehend aus Alkyl, Alkoxy, Chlor, Brom, Carboxy und Sulfo ausgewählt werden, oder unsubstituiertes oder mit 1 oder 2 Sulfogruppen substituiertes Naphthyl steht;
und
p₁ 0 oder 1 ist.

2. Farbstoffe der Formel (21) 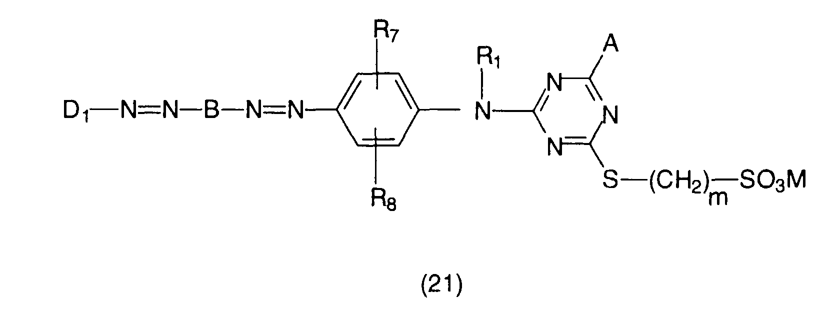 worin
A, m, R₁, D₁, B und M die gleiche Bedeutung wie in Anspruch 1 haben;
und
R₇, R₈ unabhängig voneinander für Wasserstoff, Alkyl oder Alkoxy oder Acylamino mit bis zu 3 C-Atomen stehen.

3. Farbstoffe der Formel (22) 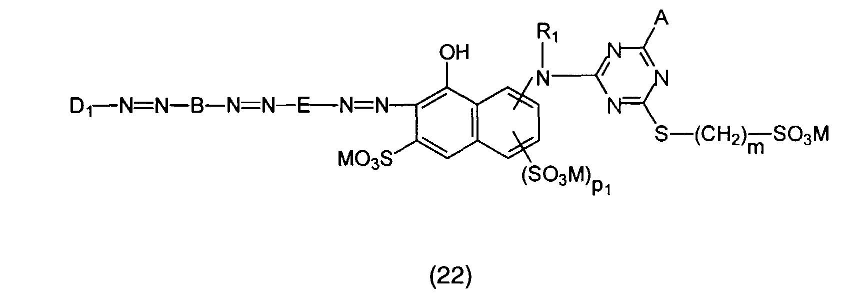 worin
A, m, R₁, D₁, B, p₁ und M die gleiche Bedeutung wie in Anspruch 1 haben;
und
E für Phenylen oder einfach oder zweifach substituiertes Phenylen, wobei die Substituenten aus der Gruppe bestehend aus Alkyl, Alkoxy, Chlor, Brom, Carboxy und Sulfo ausgewählt werden, oder unsubstituiertes oder einfach oder zweifach substituiertes Naphthylen, wobei die Substituenten aus der Gruppe bestehend aus Sulfo, Hydroxy und Amino ausgewählt werden, steht.

4. Farbstoffe der Formel (23) 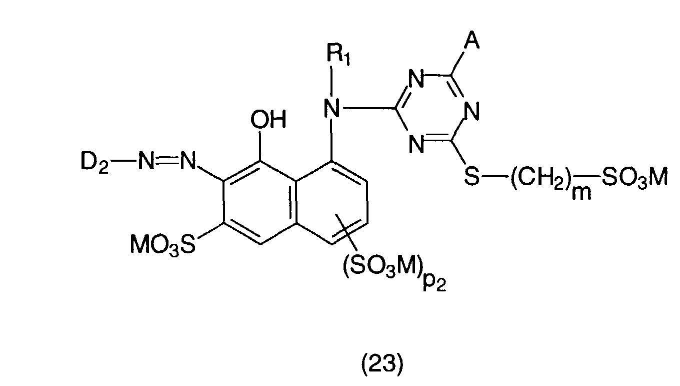 worin
A, m, R₁ und M die gleiche Bedeutung wie in Anspruch 1 haben;
D₂ für Phenyl oder einfach oder zweifach substituiertes Phenyl, wobei die Substituenten aus der Gruppe bestehend aus Alkyl, Alkoxy, Chlor, Brom, Carboxy und Sulfo ausgewählt werden, oder unsubstituiertes oder mit 1 oder 2 Sulfogruppen substituiertes Naphthyl steht;
und
p₂ 0 oder 1 ist.

5. Farbstoffe der Formel (24) 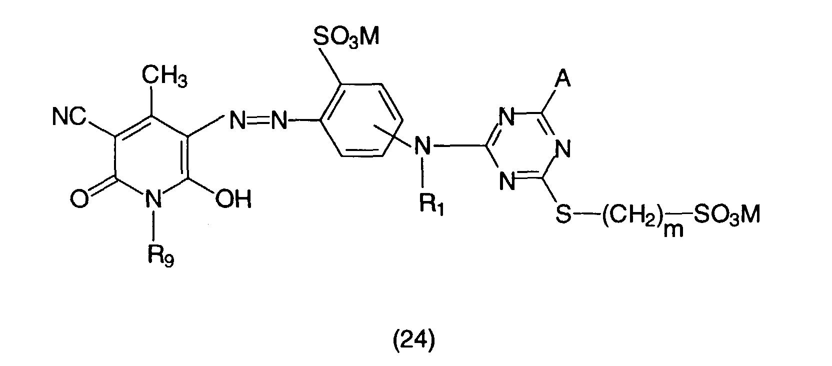 worin
A, m, R₁ und M die gleiche Bedeutung wie in Anspruch 1 haben; und
R₉ für Wasserstoff, Alkyl mit 1 bis 6 C-Atomen, substituiertes Alkyl mit 2 bis 6 C-Atomen, wobei die Substituenten aus der Gruppe bestehend aus Carboxy, Hydroxy und Sulfo ausgewählt werden, Phenyl oder substituiertes Phenyl, wobei die Substituenten aus der Gruppe bestehend aus Methyl, Chlor, Brom und Sulfo ausgewählt werden, steht.

6. Farbstoffe der Formel (25) 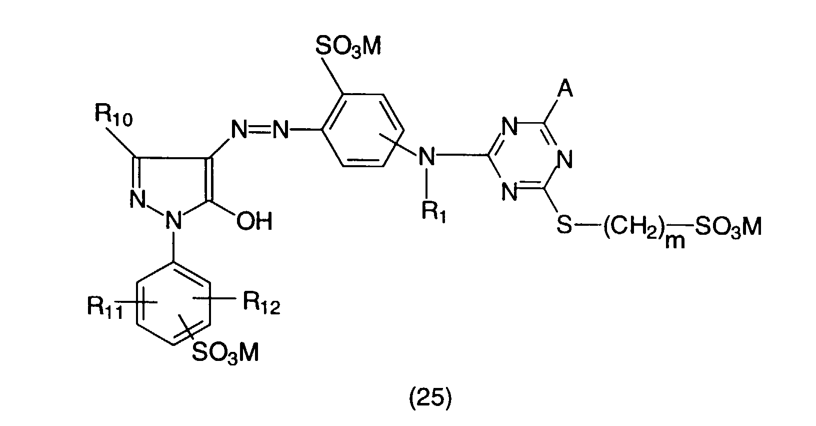 worin
A, m, R₁ und M die gleiche Bedeutung wie in Anspruch 1 haben;
R₁₀ für CH₃, COOH oder NHCOCH₃ steht;
und
R₁₁, R₁₂ unabhängig voneinander für Wasserstoff, Chlor, Brom oder Methyl stehen.

7. Farbstoffe der Formel (26), 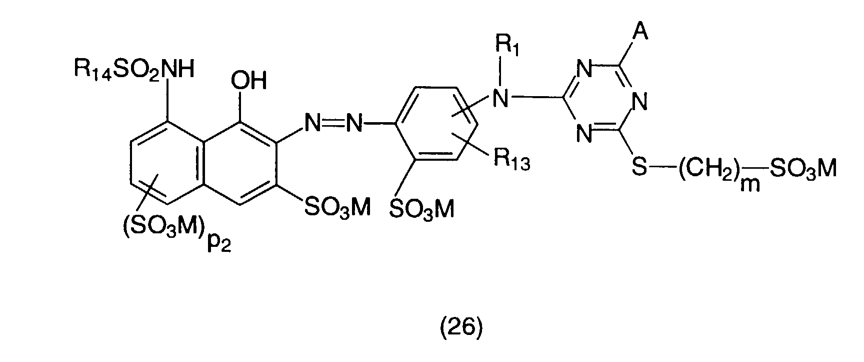 worin
A, m, R₁ und M die gleiche Bedeutung wie in Anspruch 1 haben;
R₁₃ für Wasserstoff, Alkyl oder Alkoxy mit je bis zu 3 C-Atomen steht;
R₁₄ für Alkyl mit 1 bis 8 C-Atomen, Phenyl oder einfach oder mehrfach substituiertes Phenyl steht, wobei die Substituenten aus der Gruppe bestehend aus Chlor, Brom, Alkyl und Alkoxy mit je 1 bis 4 C-Atomen ausgewählt werden;
und
p₂ 0 oder 1 ist.

8. Farbstoffe der Formel (27) 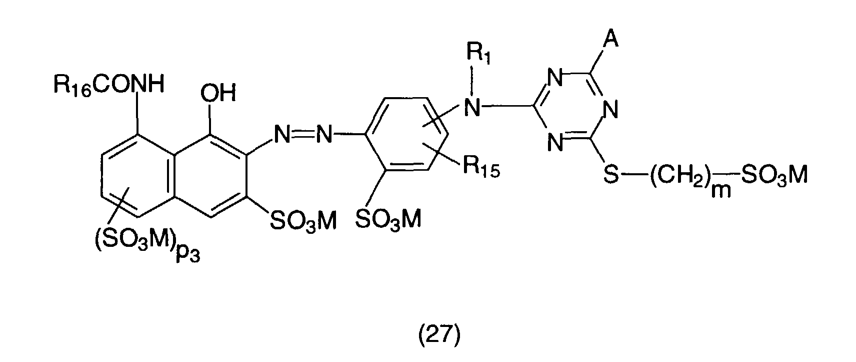 worin
A, m, R₁ und M die gleiche Bedeutung wie in Anspruch 1 haben;
R₁₅ für Wasserstoff, Alkyl oder Alkoxy mit bis zu 3 C-Atomen steht;
R₁₆ für Alkyl mit 1 bis 8 C-Atomen, substituiertes Alkyl mit 1 bis 6 C-Atomen, wobei die Substituenten aus der Gruppe bestehend aus COOCH₃, COOH und Halogen ausgewählt werden, Phenyl oder einfach oder mehrfach substituiertes Phenyl, wobei die Substituenten aus der Gruppe bestehend aus Chlor, Brom, Alkyl, Alkoxy, Alkylcarbonylamino und Alkylsulfonyl mit je 1 bis 4 C-Atomen ausgewählt werden, oder Pyridin steht;
und
p₃ 0 oder 1 ist.

9. Farbstoffe der Formel (28) 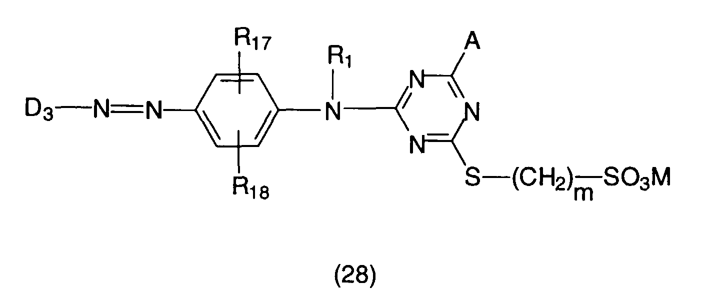 worin
A, m, R₁ und M die gleiche Bedeutung wie in Anspruch 1 haben;
D₃ für Phenyl oder einfach oder zweifach substituiertes Phenyl steht, wobei die Substituenten aus der Gruppe bestehend aus Sulfo, Chlor, Brom, Carboxy, Alkyl und Alkoxy ausgewählt werden;
und
R₁₇, R₁₈ unabhängig voneinander für Wasserstoff, Chlor, Brom, Ureido, Alkyl, Alkoxy oder Acylamino mit je bis zu 3 C-Atomen stehen.

10. Farbstoffe der Formel (29), 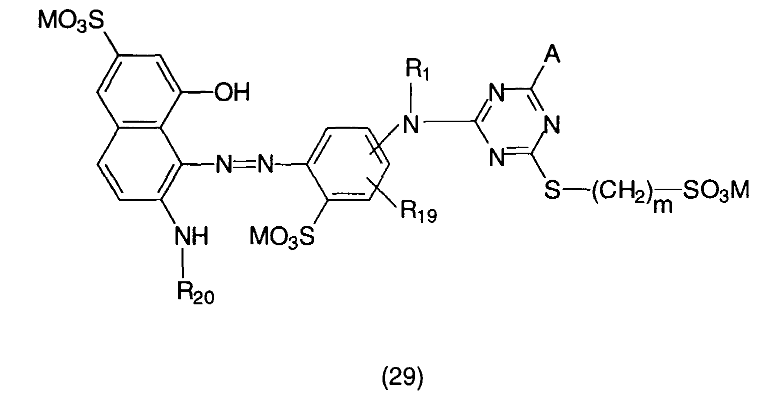 worin A, m, R₁ und M die gleiche Bedeutung wie in Anspruch 1 haben;
R₁₉ für Wasserstoff, Alkyl oder Alkoxy mit bis zu 3 C-Atomen steht;
und
R₂₀ für Wasserstoff, Alkyl mit 1 bis 6 C-Atomen, substituiertes Alkyl mit 2 bis 6 C-Atomen, wobei die Substituenten aus der Gruppe bestehend aus CN, COOH, OH, COOCH₃, COOCH₂CH₃ und COCH₃ ausgewählt werden, Phenyl oder substituiertes Phenyl, wobei die Substituenten aus der Gruppe bestehend aus Methyl, Chlor und Brom ausgewählt werden, steht.

11. Farbstoffe der Formel (30) 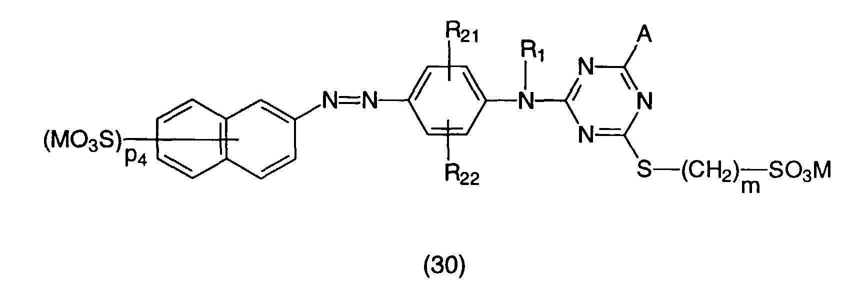 worin
A, m, R₁ und M die gleiche Bedeutung wie in Anspruch 1 haben;
R₂₁, R₂₂ unabhängig voneinander für Wasserstoff, Chlor, Brom, Ureido, Alkyl, Alkoxy oder Acylamino mit je bis zu 3 C-Atomen stehen,
und
p₄ 1, 2 oder 3 ist und die SO₃M-Gruppe in den Stellungen 1 oder 4 oder 5 oder 6 oder 7 oder 8 steht, wenn p₄ den Wert 1 hat; oder die SO₃M-Gruppen in den Stellungen 4 und 8 oder 5 und 7 oder 6 und 8 oder 1 und 5 stehen, wenn p₄ den Wert 2 hat; oder die SO₃M-Gruppen in den Stellungen 3 und 6 und 8 oder 4 und 6 und 8 stehen, wenn p₄ den Wert 3 hat.

12. Farbstoffe nach einem der Ansprüche 1 bis 11, worin
m einen Wert zwischen 2 und 4 annimmt;
und
R₁ für Wasserstoff steht.

13. Farbstoffe nach einem der Ansprüche 1 bis 12,
worin
M ein Alkalimetallatom ist.

14. Verfahren zur Herstellung der Azofarbstoffe gemäss einem oder mehreren der Ansprüche 1 bis 13, dadurch gekennzeichnet, dass
(i) eine Verbindung der Formel (5) 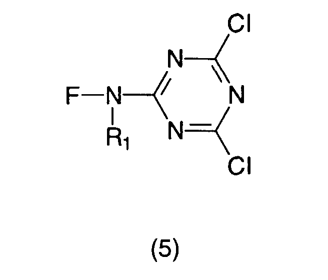 worin R₁ die gleiche Bedeutung wie in Anspruch 1 hat und F eines der Farbstoffradikale aus den Ansprüchen 1 bis 11 ist, mit einer Verbindung der Formel (6) 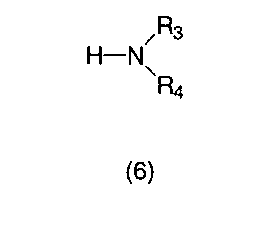 worin R₃ und R₄ die gleiche Bedeutung wie in Anspruch 1 haben, unter Bedingungen umgesetzt wird, dass eines der Chloratome des Dichlortriazins der Formel (5) durch die Verbindung der Formel (6) ersetzt wird;
oder eine Verbindung der Formel (7) 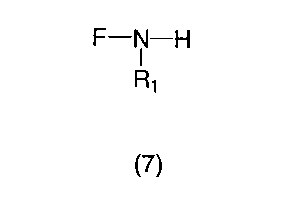 worin R₁ die gleiche Bedeutung wie in Anspruch 1 hat und F eines der Farbstoffradikale aus den Ansprüchen 1 bis 11 ist, mit einer Verbindung der Formel (8) 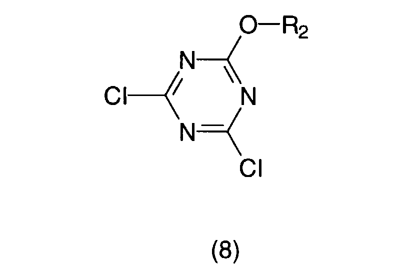 worin R₂ die gleiche Bedeutung wie in Anspruch 1 hat, unter Bedingungen umgesetzt wird, dass eines der Chloratome des Dichlortriazins der Formel (8) durch die Verbindung der Formel (7) ersetzt wird,
und
(ii) das disubstituierte Triazin mit einer Verbindung der Formel (9) 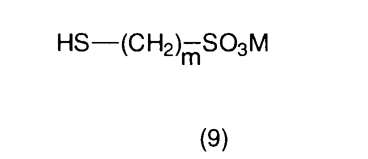 worin m die gleiche Bedeutung wie in Anspruch 1 hat, unter Bedingungen umgesetzt wird, dass das dritte Chloratom des Triazinrings durch die Verbindung der Formel (9) ersetzt wird.

15. Verwendung von Azofarbstoffen gemäss einem oder mehreren der Ansprüche 1 bis 13 zum Färben von cellulosehaltigen Materialien, Papier, Baumwolle, Viskose, Leder und Wolle.

16. Flüssige Farbstoffpräparationen, die mindestens einen Farbstoff oder eine Mischung von Farbstoffen nach einem oder mehreren der Ansprüche 1 bis 13 enthalten.

17. Tinten für den Tintenstrahldruck, die mindestens einen Farbstoff oder eine Mischung von Farbstoffen nach einem oder mehreren der Ansprüche 1 bis 13 enthalten.

## Claims

1. Dyes of formula (20), 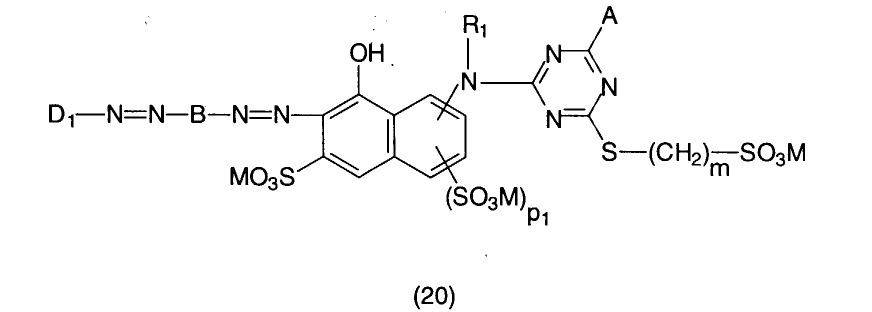 wherein
R₁ represents hydrogen or alkyl with 1 to 6 C atoms;
A represents NR₃R₄, wherein R₃ and R₄ independently represent hydrogen; alkyl with 1 to 6 C atoms; aralkyl, aryl or substituted aryl with 2 to 6 C atoms, where the substituents are selected from the group consisting of COOM, Cl, Br or SO₃M; or where R₃ and R₄ together form a ring with or without a hetero atom;
or
represents OR₂ wherein R₂ represents hydrogen or alkyl with 1 to 8 C atoms;
m is from 2 to 6;
M represents hydrogen, a metal atom, ammonium or substituted ammonium, wherein the substituents are selected from the group consisting of alkyl, alkoxyalkyl or hydroxyalkyl each having from 1 to 12 C atoms and phenyl; guanidinium or substituted guanidinium, where the substituent is selected from the group consisting of alkyl with 1 to 12 C atoms and phenyl;
B represents one of the following groups 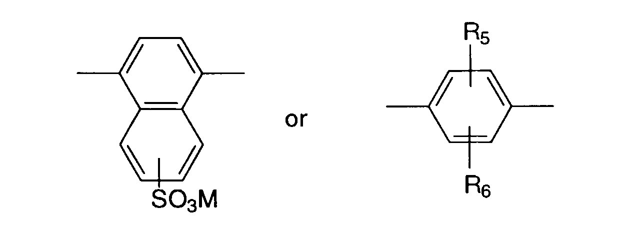
wherein
R₅, R₆ independently represent hydrogen, alkyl or alkoxy each having from 1 to 4 C atoms, chloro, bromo, carboxy or sulpho;
D₁ represents phenyl or phenyl substituted by one or two substituents selected from the group consisting of alkyl, alkoxy, chloro, bromo, carboxy and sulpho, or unsubstituted naphthyl or naphthyl substituted by 1 or 2 sulpho groups;
and
p₁ is 0 or 1.

2. Dyes of formula (21), 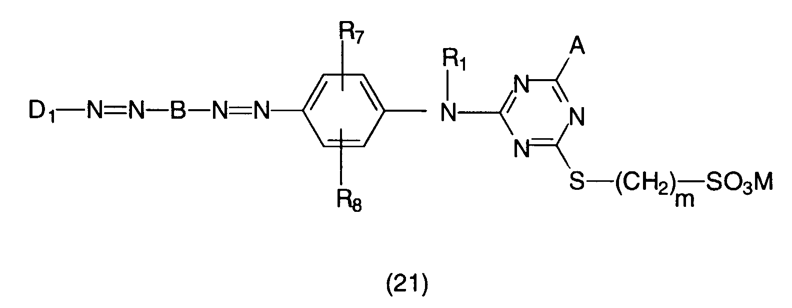 wherein
A, m, R₁, D₁, B and M are as defined in claim 1;
and
R₇, R₈ independently represent hydrogen, alkyl or alkoxy or acylamino with up to 3 C atoms.

3. Dyes of formula (22), 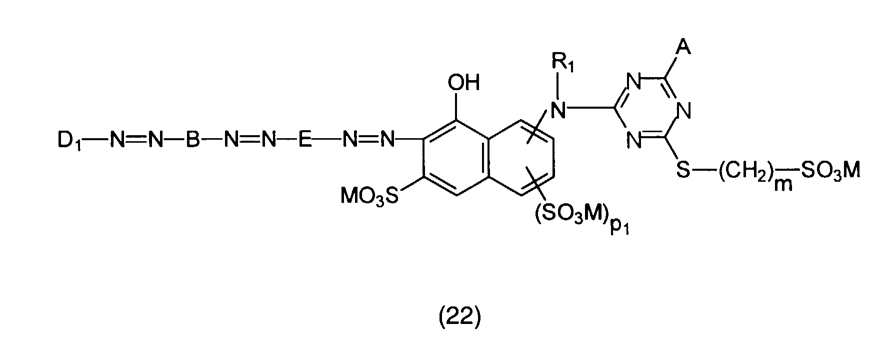 wherein
A, m, R₁, D₁, B, p₁ and M are as defined in claim 1;
and
E represents phenylene or phenylene substituted by one or two substituents selected from the group consisting of alkyl, alkoxy, chloro, bromo, carboxy and sulpho, or unsubstituted naphthylene or naphthylene substituted by one or two substituents selected from the group consisting of sulpho, hydroxy and amino.

4. Dyes of formula (23), 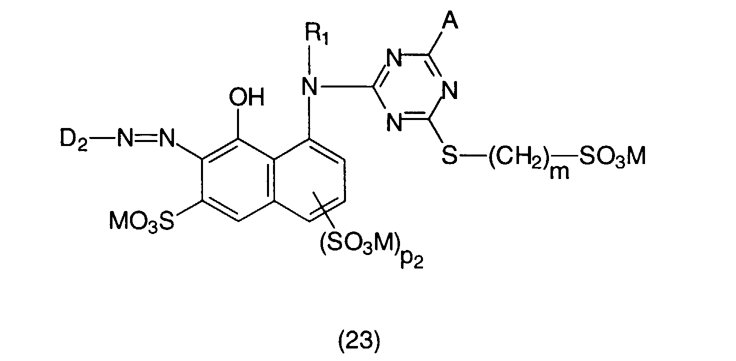 wherein
A, m, R₁ and M are as defined in claim 1;
D₂ represents phenyl or phenyl substituted by one or two substituents selected from the group consisting of alkyl, alkoxy, chloro, bromo, carboxy and sulpho, or unsubstituted naphthyl or naphthyl substituted by one or two sulpho groups;
and
p₂ is 0 or 1.

5. Dyes of formula (24), 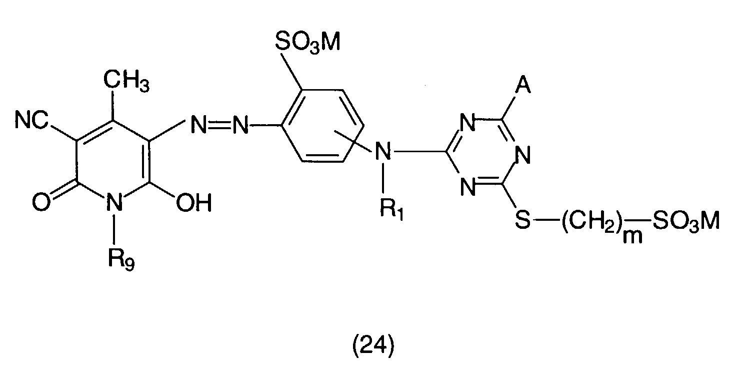 wherein
A, m, R₁ and M are as defined in claim 1;
and
R₉ represents hydrogen, alkyl with 1 to 6 C atoms, substituted alkyl with 2 to 6 C atoms, where the substituents are selected from the group consisting of carboxy, hydroxy and sulpho, phenyl or substituted phenyl, where the substituents are selected from the group consisting of methyl, chloro, bromo and sulpho.

6. Dyes of formula (25), 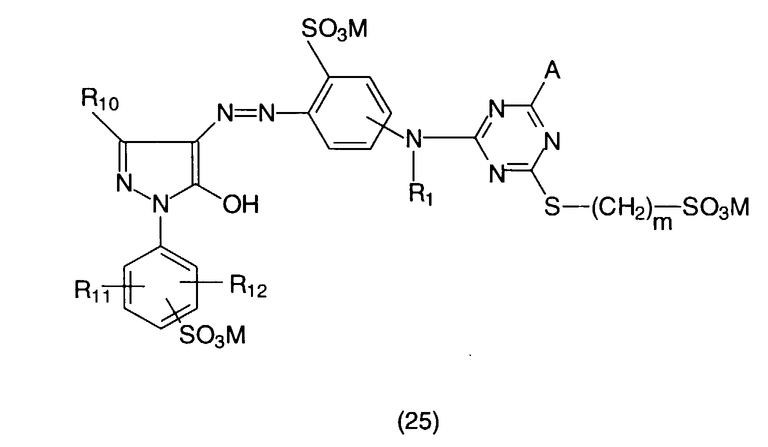 wherein
A, m, R₁ and M are as defined in claim 1;
R₁₀ represents CH₃, COOH or NHCOCH₃;
and
R₁₁, R₁₂ independently represent hydrogen, chloro, bromo or methyl.

7. Dyes of formula (26), 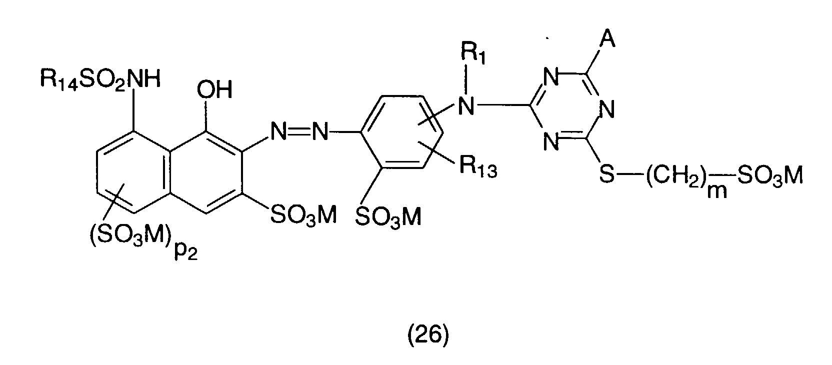 wherein
A, m, R₁ and M are as defined in claim 1;
R₁₃ represents hydrogen, alkyl or alkoxy each having up to 3 C atoms;
R₁₄ represents alkyl with 1 to 8 C atoms, phenyl or phenyl substituted by one or more substituents selected from the group consisting of chloro, bromo, alkyl and alkoxy each having from 1 to 4 C atoms;
and
p₂ is 0 or 1.

8. Dyes of formula (27), 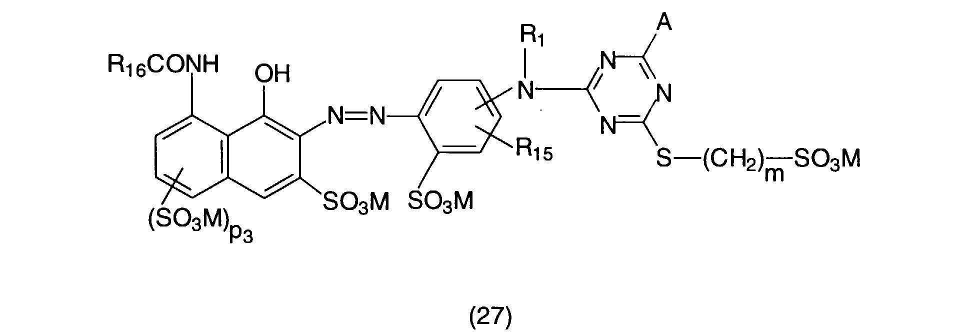 wherein
A, m, R₁ and M are as defined in claim 1;
R₁₅ represents hydrogen, alkyl or alkoxy each having up to 3 C atoms;
R₁₆ represents alkyl with 1 to 8 C atoms, substituted alkyl with 1 to 6 C atoms, where the substituents are selected from the group consisting of COOCH₃, COOH and halogen, phenyl or phenyl substituted by one or more substituents selected from the group consisting of chloro, bromo, alkyl, alkoxy, alkylcarbonylamino and alkylsulphonyl each having from 1 to 4 C atoms, or pyridine;
and
p₃ is 0 or 1.

9. Dyes of formula (28), 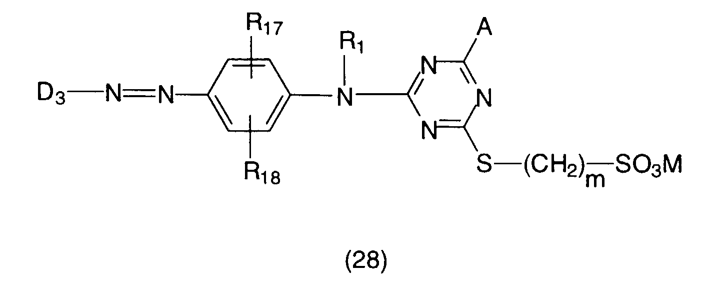 wherein
A, m, R₁ and M are as defined in claim 1;
D₃ represents phenyl or phenyl substituted by one or two substituents selected from the group consisting of sulpho, chloro, bromo, carboxy, alkyl and alkoxy;
and
R₁₇, R₁₈ independently represent hydrogen, chloro, bromo, ureido, alkyl, alkoxy or acylamino each having up to 3 C atoms.

10. Dyes of formula (29), 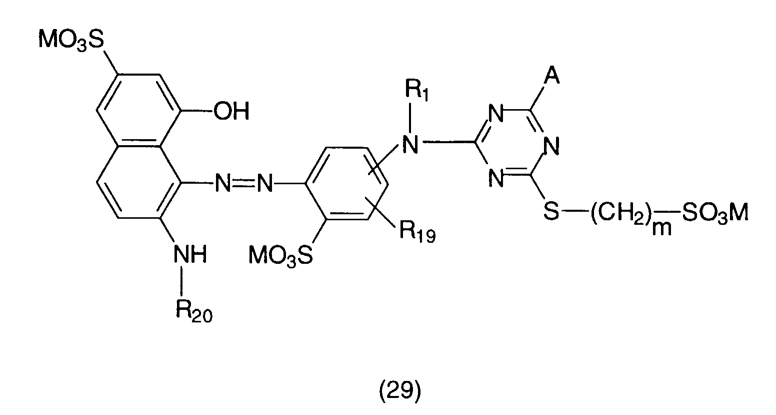 wherein
A, m, R₁ and M are as defined in claim 1;
R₁₉ represents hydrogen, alkyl or alkoxy with up to 3 C atoms; and
R₂₀ represents hydrogen, alkyl with 1 to 6 C atoms, substituted alkyl with 2 to 6 C atoms, where the substituents are selected from the group consisting of CN, COOH, OH, COOCH₃, COOCH₂CH₃ and COCH₃, phenyl or substituted phenyl, where the substituents are selected from the group consisting of methyl, chloro and bromo.

11. Dyes of formula (30), 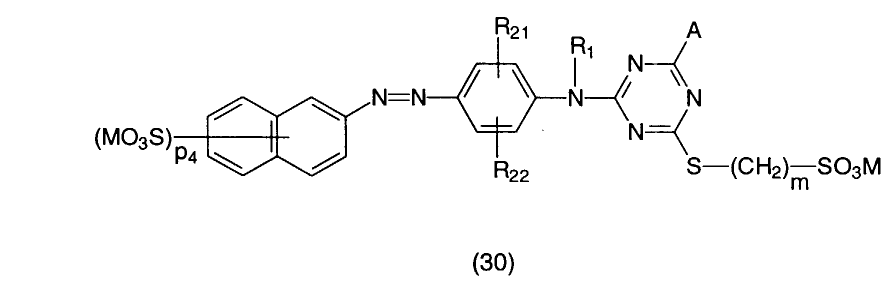 wherein
A, m, R₁ and M are as defined in claim 1;
R₂₁, R₂₂ independently represent hydrogen, chloro, bromo, ureido, alkyl, alkoxy or acylamino each having up to 3 C atoms;
and
p₄ is 1, 2 or 3 and the SO₃M group is in positions 1 or 4 or 5 or 6 or 7 or 8, when p₄ is 1; or the SO₃M groups are in positions 4 and 8 or 5 and 7 or 6 and 8 or 1 and 5, when p₄ is 2; or the SO₃M groups are in positions 3 and 6 and 8 or 4 and 6 and 8, when p₄ is 3.

12. Dyes according to anyone of claims 1 to 11,
wherein
m is from 2 to 4;
and
R₁ represents hydrogen.

13. Dyes according to anyone of claims 1 to 12, wherein
M represents an alkali metal atom.

14. Process for the preparation of azo dyes according to anyone of claims 1 to 13, wherein
(i) a compound of formula (5) 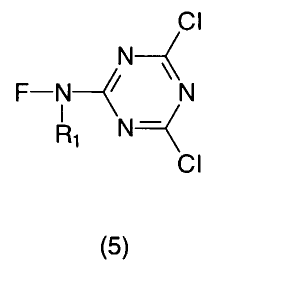 where R₁ is as defined in claim 1 and F represents one of the dye radicals from claims 1 to 11,
is reacted with a compound of formula (6) 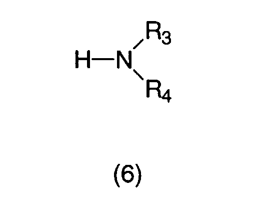 where R₃ and R₄ are as defined in claim 1,
under conditions where one of the chlorine atoms of the dichlorotriazine of formula (5) is replaced by the compound of formula (6);
or a compound of formula (7) 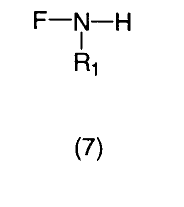 where R₁ is as defined in claim 1 and F represents one of the dye radicals from claims 1 to 11, is reacted with a compound of formula (8) 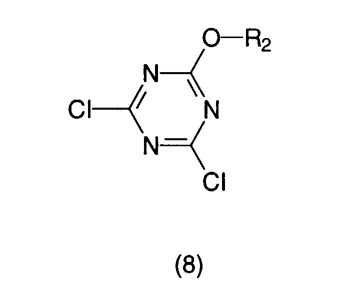 where R₂ is as defined in claim 1,
under conditions that one of the chlorine atoms of the dichlorotriazine of formula (8) is replaced by the compound of formula(7),
and
(ii)the disubstituted triazine is reacted with a compound of formula (9) 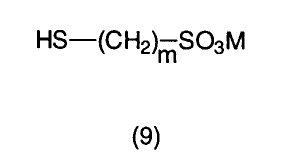 where m is as defined in claim 1,
under conditions that the third chlorine atom of the triazine ring is replaced by the compound of formula (9).

15. Process for dyeing cellulose containing material, paper, cotton, viscose, leather and wool by applying thereto an azo dye according to anyone of claims 1 to 13.

16. Liquid dye preparations comprising a dye or a mixture of dyes according to anyone of claims 1 to 13.

17. Inks for ink jet printing comprising a dye or a mixture of dyes according to anyone of claims 1 to 13.

## Revendications

1. Colorants de formule (20) 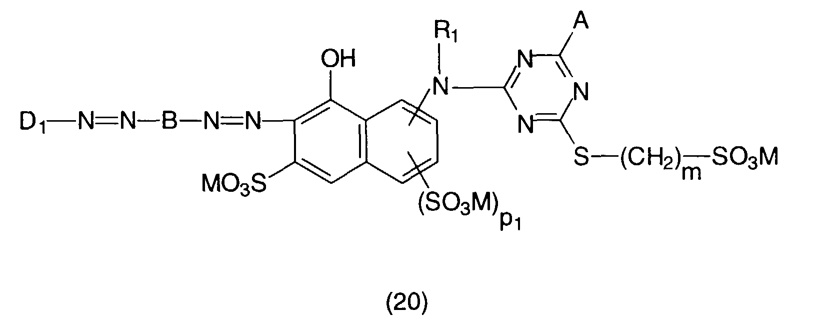
R₁ représente un atome d'hydrogène ou un radical alkyle ayant de 1 à 6 atomes de carbone;
A représente NR₃R₄, où R₃ et R₄ représentent indépendamment un atome d'hydrogène; un radical alkyle ayant de 1 à 6 atomes de carbone; un radical aralkyle; un radical aryle ou un radical aryle substitué, où les substituants sont choisis parmi le groupe constitué du radical COOM, de l'atome de chlore, de l'atome de brome ou du radical SO₃M; ou R₃ et R₄ forment un cycle avec ou sans inclusion d'un héteroatome;
ou
représente OR₂ et R₂ représente un atome d'hydrogène ou un radical alkyle ayant de 1 à 8 atomes de carbone;
m représente une valeur entre 2 et 6;
M représente un atome d'hydrogène, un atome métallique, un groupe ammonium ou un groupe ammonium substitué, dans lequel les substituants sont choisis parmi le groupe constitué du radical alkyle, du radical alcoxyalkyle ou du radical hydroxyalkyle, ayant chacun de 1 à 12 atomes de carbone, et du radical phényle, un groupe guanidinium ou un groupe guanidinium substitué dans lequel le substituant est choisi parmi le groupe constitué du radical alkyle ayant de 1 à 12 atomes de carbone et du radical phényle;
B représente un des groupes suivants, 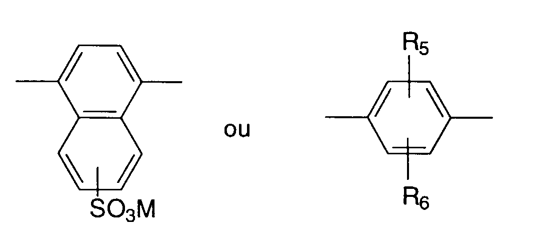
où
R₅, R₆ représentent indépendamment un atome d'hydrogène, un radical alkyle ou un radical alcoxy ayant chacun de 1 à 4 atomes de carbone, un atome de chlore, un atome de brome, un radical carboxy ou un radical sulfo;
D₁ représente un radical phényle ou un radical phényle substitués par un ou deux substituants choisis parmi le groupe constitué du radical alkyle, du radical alcoxy, de l'atome de chlore, de l'atome de brome, du radical carboxy et du radical sulfo, ou un radical naphtyle non substitué ou substitué par 1 ou 2 substituants sulfo;
et
p₁ vaut 0 ou 1.

2. Colorants de formule (21) 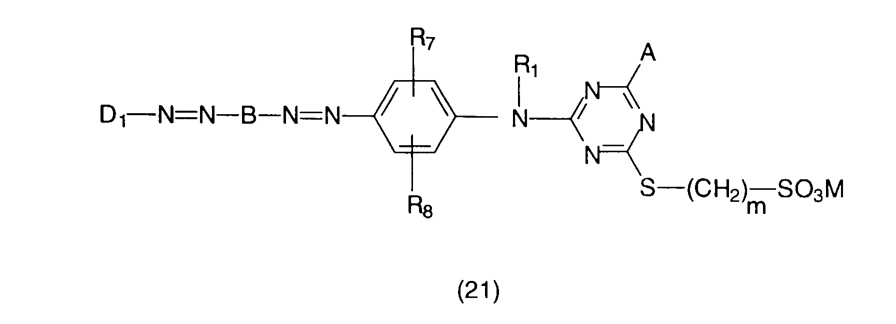 dans laquelle
A, m, R₁, D₁, B et M sont définis comme à la revendication 1; et
R₇, R₈ représentent indépendamment un atome d'hydrogène, un radical alkyle ou un radical alcoxy ou un radical acylamino ayant de jusqu'à 3 atomes de carbone.

3. Colorants de formule (22) 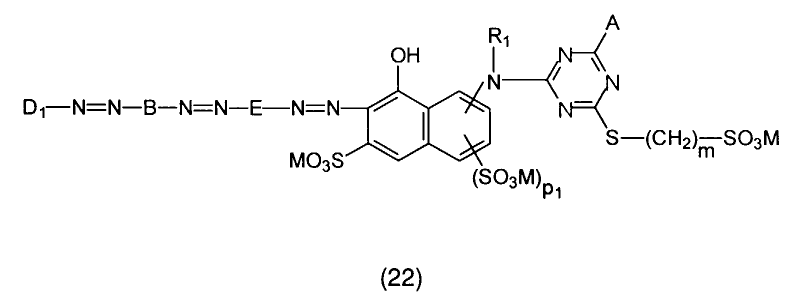 dans laquelle
A, m, R₁, D₁, B, p₁ et M sont définis comme à la revendication 1;
et
E représente un radical phénylène ou un radical phénylène substitué par un ou deux substituants choisi parmi le groupe constitué du radical alkyle, du radical alcoxy, de l'atome de chlore, de l'atome de brome, du radical carboxy et du radical sulfo, ou un radical naphtylène non substitué ou substitué par un ou deux substituants choisis parmi le groupe constitué du radical sulfo, du radical hydroxy et du radical amino.

4. Colorants de formule (23) 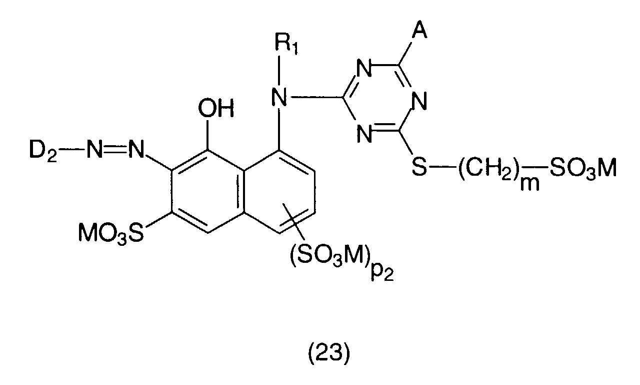 dans laquelle
A, m, R₁ et M sont définis comme à la revendication 1;
D₂ représente un radical phényle ou un radical phényle substitué par un ou deux substituants choisis parmi le groupe constitué du radical alkyle, du radical alcoxy, de l'atome de chlore, de l'atome de brome, du radical carboxy et du radical sulfo, ou un radical naphtyle non substitué ou substitué par 1 ou 2 substituants sulfo;
et
p₂ vaut 0 ou 1.

5. Colorants de formule (24) 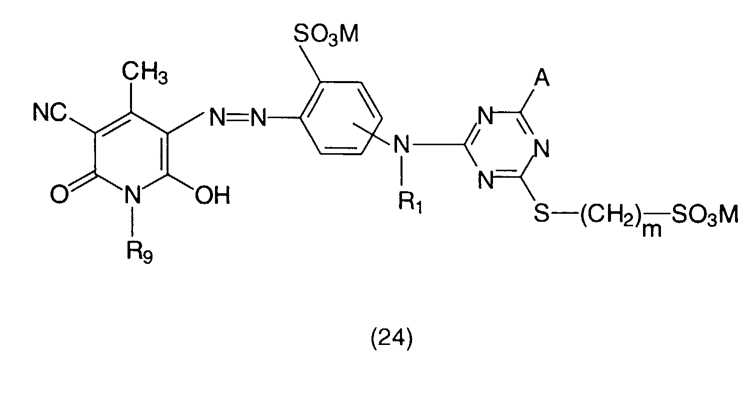 dans laquelle
A, m, R₁ et M sont définis comme à la revendication 1;
et
R₉ représente un atome d'hydrogène; un radical alkyle ayant de 1 à 6 atomes de carbone, un radical alkyle substitué ayant de 2 à 6 atomes de carbone, où les substituants sont choisis parmi le groupe constitué du radical carboxy, du radical hydroxy et du radical sulfo; un radical phényle ou un radical phényle substitué, où les substituants sont choisis parmi le groupe constitué du radical méthyle, de l'atome de chlore, de l'atome de brome et du radical SO₃M.

6. Colorants de formule (25) 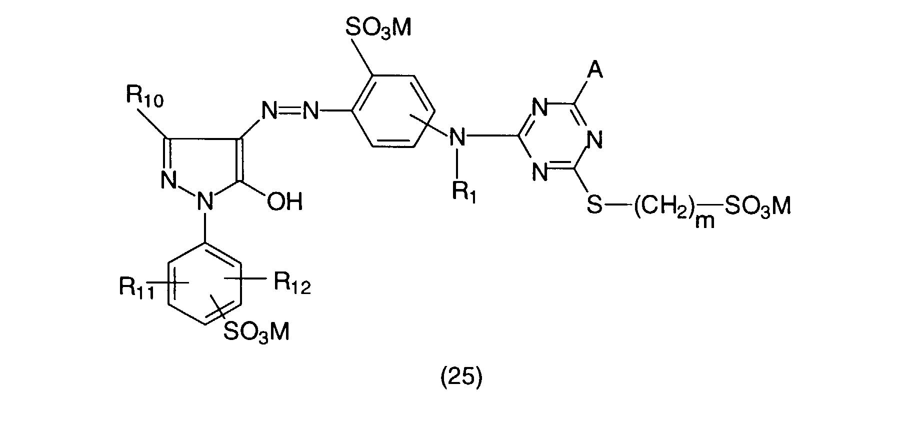 dans laquelle A, m, R₁ et M sont définis comme à la revendication 1;
R₁₀ représente un radical CH₃, un radical COOH ou un radical NHCOCH₃;
et
R₁₁, R₁₂ représentent indépendamment un atome d'hydrogène, un atome de chlore, un atome de brome ou un radical méthyle.

7. Colorants de formule (26), 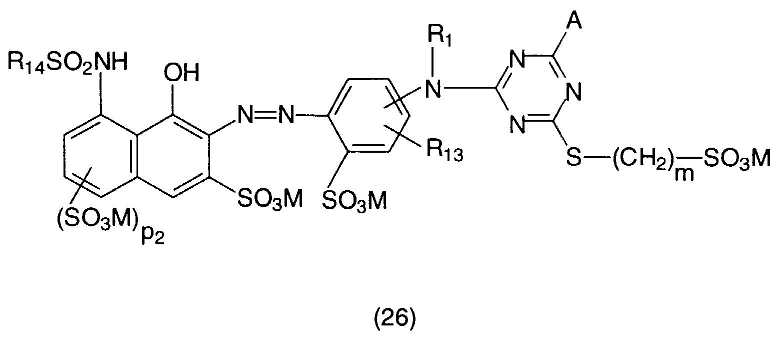 dans laquelle
A, m, R₁ et M sont définis comme à la revendication 1;
R₁₃ représente un atome d'hydrogène, un radical alkyle ou un radical alcoxy ayant chacun jusqu'à 3 atomes des carbone;
R₁₄ représente un radical alkyle ayant de 1 à 8 atomes de carbone, un radical phényle ou un radical phényle substitué par un ou plusieurs substituants choisis parmi le groupe constitué de l'atome de chlore, de l'atome de brome, du radical alkyle et du radical alcoxy ayant chacun de 1 à 4 atomes de carbone;
et
p₂ vaut 0 ou 1.

8. Colorants de formule (27) 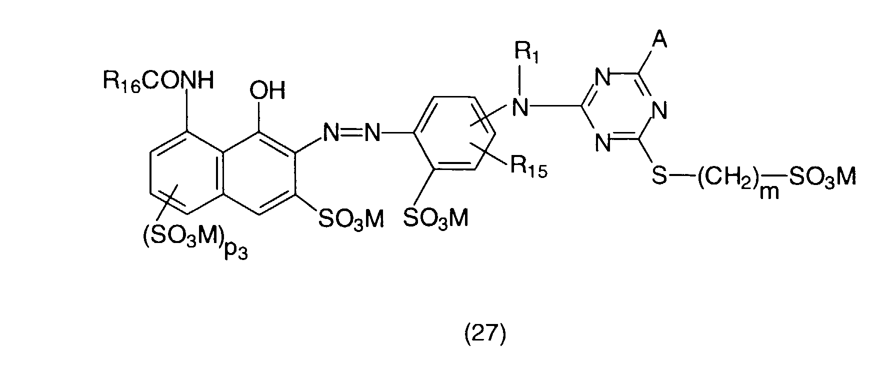 dans laquelle
A, m, R₁ et M sont définis comme à la revendication 1;
R₁₅ représente un atome d'hydrogène, un radical alkyle ou un radical alcoxy ayant jusqu'à 3 atomes de carbone;
R₁₆ représente un radical alkyle ayant de 1 à 8 atomes de carbone, un radical alkyle substitué ayant de 1 à 6 atomes de carbone, où les substituants sont choisis parmi le groupe constitué du radical COOCH₃, du radical COOH et de l'atome de halogène, un radical phényle ou un radical phényle substitué par un ou plusieurs substituants choisis parmi le groupe constitué de l'atome de chlore, de l'atome de brome, du radical alkyle, du radical alcoxy, du radical alkylcarbonylamino et du radical alkylsulfonyl ayant chacun de 1 à 4 atomes de carbone, ou pyridine;
et
p₃ vaut 0 ou 1.

9. Colorants de formule (28) 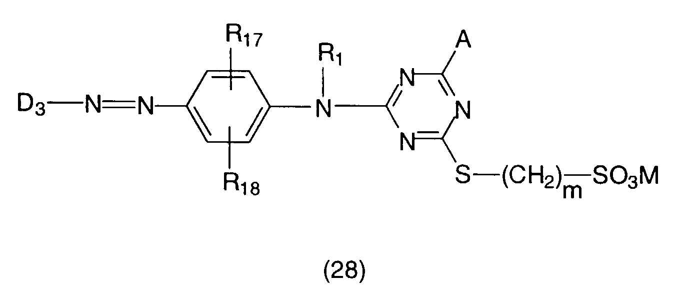 dans laquelle
A, m, R₁ et M sont définis comme à la revendication 1;
D₃ représente un radical phényle ou un radical phényle substitué par un ou deux substituants choisis parmi le groupe constitué du radical sulfo, de l'atome de chlore, de l'atome de brome, du radical carboxy, du radical alkyle et du radical alcoxy;
et
R₁₇, R₁₈ représentent indépendamment un atome d'hydrogène, un atome de chlore, un atome de brome, un radical ureido, un radical alkyle, un radical alcoxy ou un radical acylamino ayant chacun jusqu'à 3 atomes de carbone.

10. Colorants de formule (29), 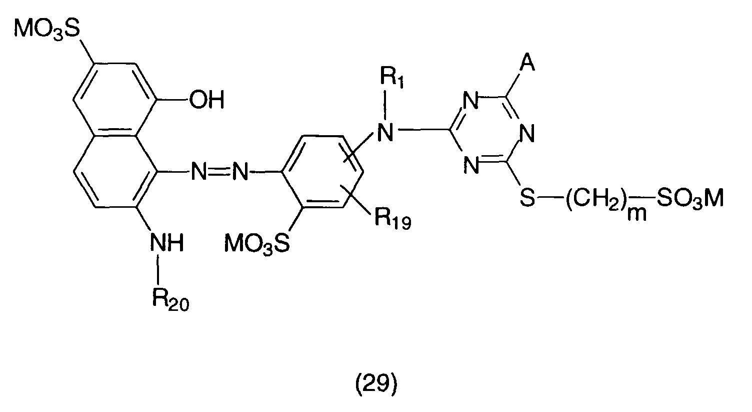 dans laquelle
A, m, R₁ et M sont définis comme à la revendication 1;
R₁₉ représente un atome d'hydrogène, un radical alkyle ou un radical alcoxy ayant jusqu'à 3 atomes de carbone;
et
R₂₀ représente un atome d'hydrogène, un radical alkyle ayant de 1 à 6 atomes de carbone, un radical alkyle substitué ayant de 2 à 6 atomes de carbone, où les substituants sont choisis parmi le groupe constitué du radical CN, du radical COOH, du radical OH, du radical COOCH₃, du radical COOCH₂CH₃ et du radical COCH₃, un radical phényle ou un radical phényle substitué, où les substituants sont choisis parmi le groupe constitué du radical méthyle, de l'atome de chlore et de l'atome de brome.

11. Colorants de formule (30) 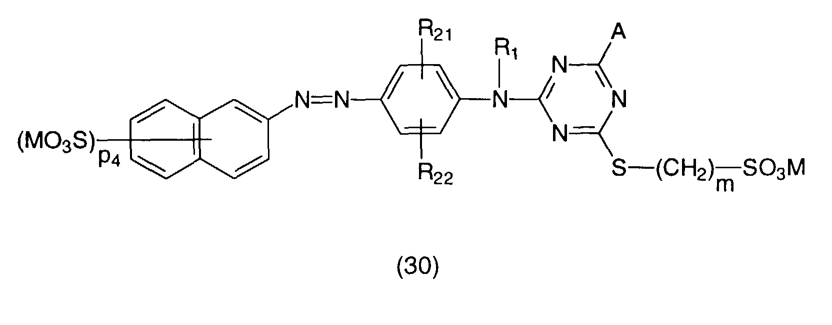 dans laquelle
A, m, R₁ et M sont définis comme à la revendication 1;
R₂₁, R₂₂ représentent indépendamment un atome d'hydrogène, un atome de chlore, un atome de brome, un radical ureido, un radical alkyle, un radical alcoxy ou un radical acylamino ayant chacun jusqu'à 3 atomes de carbone,
et
p₄ vaut 1, 2 ou 3 et le radical SO₃M est dans les positions 1 ou 4 ou 5 ou 6 ou 7 ou 8 dans le cas où p₄ vaut 1; ou les radicaux SO₃M sont dans les positions 4 et 8 ou 5 et 7 ou 6 et 8 ou 1 et 5 dans le cas où p₄ vaut 2; ou les radicaux SO₃M sont dans les positions 3 et 6 et 8 ou 4 et 6 et 8 dans le cas où p₄ vaut 3.

12. Colorants selon une des revendications 1 à 11, où
m vaut entre 2 et 4;
et
R₁ représente un atome d'hydrogène.

13. Colorants selon une des revendications 1 à 12,
où
M représente un atome d'un métal alcalin.

14. Procédé de préparation des colorants azoïques selon une ou plusieurs des revendications 1 à 13, où
(i) on fait réagir un composé de formule (5) 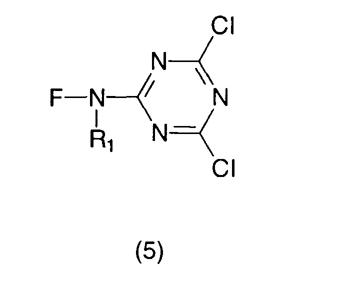 dans laquelle R₁ est tel que défini dans la revendication 1 et F représente un des radicaux de colorants dans les revendications 1 à 11, avec un composé de formule (6) 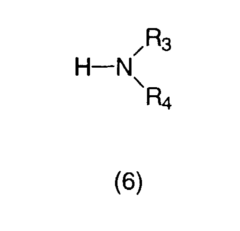 dans laquelle R₃ et R₄ sont tels que définis dans la revendication 1, dans des conditions telles qu'un des atomes de chlore de la dichlorotriazine de la formule (5) est remplacé par le composé de formule (6); ou un composé de formule (7) 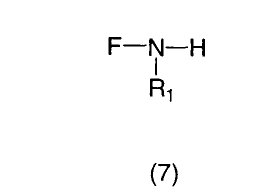 dans laquelle R₁ est tel que défini dans la revendication 1 et F représente un des radicaux de colorants dans les revendications 1 à 11, avec un composé de formule (8) 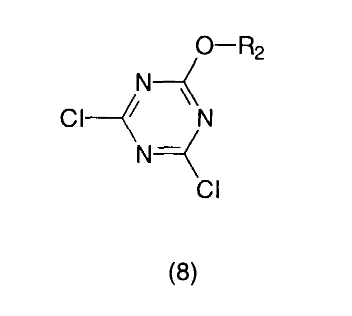 dans laquelle R₂ est tel que défini dans la revendication 1, dans des conditions telles qu'un des atomes de chlore de la dichlorotriazine de la formule (5) est remplacé par le composé de formule (7).
et
(ii)on fait réagir la triazine disubstituée avec un composé de formule (9) 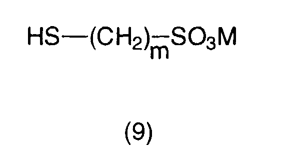 dans laquelle m est tel que défini dans la revendication 1, dans des conditions que la troisième atome de chlore du cycle triazinique est remplacé par le composé de formule (9).

15. Utilisation des colorants azoïques selon une ou plusieurs des revendications 1 à 13 pour la teinture des matériaux cellulosiques, du papier, du coton, da la viscose, du cuir et de la laine.

16. Préparations liquides contenant au moins un colorant ou un mélange de colorants selon une ou plusieurs des revendications 1 à 13.

17. Encres d'impression selon la méthode du jet d'encre qui comprennent au moins un colorant ou un mélange de colorants selon une ou plusieurs des revendications 1 à 13.
